# EUROPEAN PATENT APPLICATION

(11) **EP 4 693 878 A1**
(43) Date of publication of application: **11.02.2026**
(21) Application number: 24779976.0
(22) Date of filing: 22.03.2024
(51) Int. Cl.: H02M 7/48, F25B 1/00, F25B 49/02

(54) **INVERTER CIRCUIT, DRIVE CIRCUIT, CONTROL DEVICE, REFRIGERATION CYCLE DEVICE, CONTROL METHOD, AND PROGRAM**

(30) Priority: 31.03.2023 JP 2023059379
(71) Applicant: Panasonic Intellectual Property Management Co., Ltd., Kadoma-shi, Osaka 571-0057 (JP)
(72) Inventor: TSUNOYAMA, Hironori, Kadoma-shi, Osaka 571-0057 (JP); NAGAO, Nobuaki, Kadoma-shi, Osaka 571-0057 (JP); HAYASHI, Naoki, Kadoma-shi, Osaka 571-0057 (JP); HASHIMOTO, Takahiko, Kadoma-shi, Osaka 571-0057 (JP); HIWATA, Akira, Kadoma-shi, Osaka 571-0057 (JP)
(74) Representative: Eisenführ Speiser
(86) International application number: PCT/JP2024/011313
(87) International publication number: WO 2024/203858

(57) **Abstract**

Provided are an inverter circuit, a drive circuit, a control device, a refrigeration cycle device, a control method, and a program which can shorten the time from the occurrence of abnormal current to the limitation or interruption of outputting AC output power, thereby improving the suppression of disproportionation reactions. An inverter circuit is included in a drive circuit for driving a compressor of a refrigeration cycle circuit allowing circulation of a working medium. The inverter circuit includes a plurality of semiconductor switching elements and being configured to output AC output power to the compressor based on DC output power. The plurality of semiconductor switching elements includes one or more protective semiconductor switching elements with a maximum allowable current smaller than 135 A.

## Description

### TECHNICAL FIELD

The present disclosure relates to inverter circuits, drive circuits, control devices, refrigeration cycle devices, control methods, and programs.

### BACKGROUND ART

Conventionally, R410A has been widely used as a working medium (heat medium, refrigerant) for refrigeration cycle devices. However, the global warming potential (GWP) of R410A is as high as 2090. Therefore, from the viewpoint of preventing global warming, research and development of working media with smaller GWPs has been conducted. Patent Document 1 discloses 1,1,2-trifluoroethylene (HFO1123) as a working medium with a smaller GWP than R410A. Patent Document 2 discloses 1,2-difluoroethylene (HFO1132) as a working medium with a smaller GWP than R410A.

HFO1123 and HFO1132 have a smaller GWP than R410A, but are therefore less stable than R410A. For example, the generation of radicals may cause a disproportionation reaction of HFO1123 or HFO1132, resulting in the conversion of HFO1123 and HFO1132 to other compounds.

Patent document 3 discloses "The disproportionation reaction occurs under excessively high-temperature and high-pressure conditions (in a compressor, in particular), triggered by a starting point when higher energy is added to the refrigerant, or when an excessive collision between refrigerant molecules and electrons occurs due to electric discharge caused by a layer short or the like."

Patent document 3 discloses "The present disclosure suppresses the occurrence of a disproportionation reaction by preventing addition of high energy to the refrigerant in the compressor or by preventing an excessive collision between refrigerant molecules and electrons in the discharge space. As a result, the present disclosure provides a more reliable refrigeration cycle device including a working medium that contains ethylene-based fluorohydrocarbon having a double bond."

The refrigeration cycle device disclosed in patent document 3 has a protective device that stops the supply of power to the compressor and/or reduces the rotational speed of the compressor when at least one of the following cases occurs: when the current value of the input current of the electric motor of the compressor exceeds a first predetermined value that is set to be three times or more the maximum current value during normal operation other than the startup of the compressor; when the current value of the input current of the electric motor of the compressor exceeds a second predetermined value that is set to be two times or more the current value during the startup of the compressor; and when the number of discharge electrons in the discharge space, which is calculated based on the amount of change in the current value of the input current of the electric motor of the compressor, exceeds a third predetermined value that is set to be 1.0 × 10¹⁹ electrons / second or more.

### PRIOR ART DOCUMENTS

### PATENT DOCUMENTS

Patent Document 1: WO 2012/157764 A1
Patent Document 2: WO 2012/157765 A1
Patent Document 3: WO 2019/172008 A1

### SUMMARY OF THE INVENTION

### PROBLEMS TO BE SOLVED BY THE INVENTION

The refrigeration cycle device disclosed in patent document 1 detects a sign of a disproportionation reaction by using a current value of an input current of an electric motor of a compressor, and suppresses the disproportionation reaction by performing at least one of interrupting the supply of electric power to the compressor and reducing the rotational speed of the compressor by a protective device.

The present disclosure provides an inverter circuit, a drive circuit, a control device, a refrigeration cycle device, a control method, and a program which can shorten the time from the occurrence of abnormal current to the limitation or interruption of outputting AC output power, thereby improving the suppression of disproportionation reactions.

### SOLUTIONS TO THE PROBLEMS

An inverter circuit according to one aspect of the present disclosure is included in a drive circuit for driving a compressor of a refrigeration cycle circuit allowing circulation of a working medium. The inverter circuit includes a plurality of semiconductor switching elements and being configured to output AC output power to the compressor based on DC output power. The plurality of semiconductor switching elements includes one or more protective semiconductor switching elements with a maximum allowable current smaller than 135 A.

A drive circuit according to one aspect of the present disclosure includes the above inverter circuit, and a converter circuit configured to output the DC output power to the inverter circuit based on input power from a power supply.

A control device according to one aspect of the present disclosure includes the above drive circuit and a control circuit configured to control the drive circuit. The control circuit is configured to interrupt or limit an operation of the drive circuit in response to detection of an abnormality in at least one of the compressor or the drive circuit.

A refrigeration cycle device according to one aspect of the present disclosure includes the above control device and the above refrigeration cycle circuit.

A control method according to one aspect of the present disclosure is a control method performed by a control device for controlling a compressor of a refrigeration cycle circuit allowing circulation of a working medium. The drive circuit includes a converter circuit configured to output DC output power based on input power from a power supply, and an inverter circuit including a plurality of semiconductor switching elements and configured to output AC output power to the compressor based on the DC output power. The plurality of semiconductor switching elements including one or more protective semiconductor switching elements with a maximum allowable current smaller than 135 A. The control method includes interrupting or limiting an operation of the drive circuit in response to detection of an abnormality in at least one of the compressor or the drive circuit.

A program according to one aspect of the present disclosure is a program executed by a computer system included in a control device for controlling a compressor of a refrigeration cycle circuit allowing circulation of a working medium. The drive circuit includes a converter circuit configured to output DC output power based on input power from a power supply, and an inverter circuit including a plurality of semiconductor switching elements and configured to output AC output power to the compressor based on the DC output power. The plurality of semiconductor switching elements including one or more protective semiconductor switching elements with a maximum allowable current smaller than 135 A. The program enables the computer system to interrupt or limit an operation of the drive circuit in response to detection of an abnormality in at least one of the compressor or the drive circuit.

### EFFECTS OF THE INVENTION

Aspects of the present disclosure can shorten the time from the occurrence of abnormal current to the limitation or interruption of outputting AC output power, thereby improving the suppression of disproportionation reactions.

### BRIEF DESCRIPTION OF THE DRAWINGS

Fig. 1 is a block diagram of a refrigeration cycle device according to one embodiment.
Fig. 2 is a schematic view of a compressor and a control device, of the refrigeration cycle device according to one embodiment.
Fig. 3 is a waveform chart of a voltage of a smoothing circuit of a drive circuit of the control device according to one embodiment.
Fig. 4 is a part of a flowchart of an operation of the control device according to one embodiment.
Fig. 5 is another part of the flowchart of the operation of the control device according to one embodiment.
Fig. 6 is another part of the flowchart of the operation of the control device according to one embodiment.
Fig. 7 is another part of the flowchart of the operation of the control device according to one embodiment.
Fig. 8 is another part of the flowchart of the operation of the control device according to one embodiment.
Fig. 9 is another part of the flowchart of the operation of the control device according to one embodiment.
Fig. 10 is a schematic view of a compressor and a control device, of a refrigeration cycle device according to variation 1.
Fig. 11 is a schematic view of an electric motor of the compressor according to variation 2.
Fig. 12 is a schematic view of a compressor and a control device, of a refrigeration cycle device according to variation 3.

### DETAILED DESCRIPTION

### [1. EMBODIMENTS]

Hereinafter, embodiments of the present disclosure will be described with reference to the drawings where appropriate. However, the following embodiments are merely examples for explaining the present disclosure, and are not intended to limit the present disclosure to the following content (e.g., shapes, dimensions, arrangement and the like, of components). Positional relationships such as up, down, left, and right are based on the positional relationships shown in the drawings, unless otherwise specified. Each figure described in the following embodiments is a schematic diagram, and the ratios of size and thickness of each component in each figure do not necessarily reflect the actual dimensional ratios. Furthermore, the dimensional ratios of each element are not limited to the ratios shown in the drawings.

In the following description, if it is necessary to distinguish a plurality of components from each other, prefixes, such as, "first", "second", or the like are attached to names of such components. However, if these components can be distinguished from each other by reference signs attached to those components, such prefixes, such as, "first", "second", or the like, may be omitted in consideration of readability of texts.

### [1.1 CONFIGURATIONS]

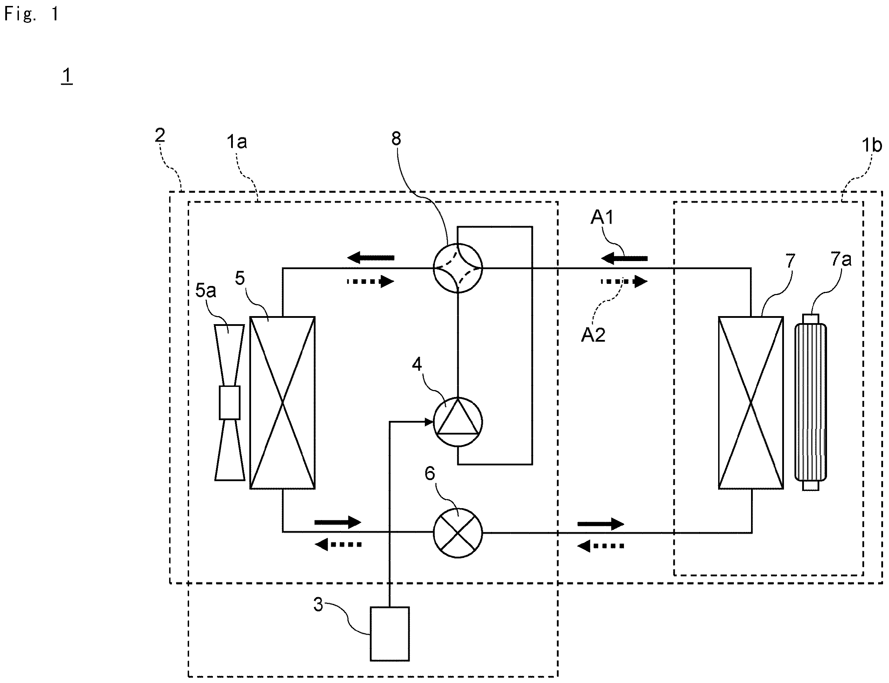

Fig. 1 is a block diagram of a refrigeration cycle device 1 according to the present embodiment. The refrigeration cycle device 1 constitutes an air conditioner enabling a cooling operation and a heating operation, for example. The refrigeration cycle device 1 includes a refrigeration cycle circuit 2 and a control device 3.

The refrigeration cycle circuit 2 constitutes a fluidic pathway where a working medium circulates. In the present embodiment, the working medium contains ethylene-based fluoroolefin as a refrigerant component. The ethylene-based fluoroolefin may be ethylene-based fluoroolefin likely to undergo a disproportionation reaction. Examples of the ethylene-based fluoroolefin likely to undergo a disproportionation reaction may include 1,1,2-trifluoroethylene (HFO1123), trans-1,2-difluoroethylene (HFO1132(E)), cis-1,2-difluoroethylene (HFO-1132(2)), 1,1-difluoroethylene (HFO-1132a), tetrafluoroethylene (CF₂=CF₂, FO1114), or monofluoroethylene (HFO-1141).

The working medium may include a plurality of types of refrigerant components. The working medium may contain ethylene-based fluoroolefin as a main refrigerant component, and additionally contain one or more chemical compounds other than ethylene-based fluoroolefin as one or more auxiliary refrigerant components. Examples of the auxiliary refrigerant components may include hydrofluorocarbons (HFC), hydrofluoroolefins (HFO), saturated hydrocarbons, and carbon dioxide. Examples of hydrofluorocarbons (HFC) may include difluoromethane, difluoroethane, trifluoroethane, tetrafluoroethane, pentafluoroethane, pentafluorobutane, and heptafluorocyclopentane. Examples of hydrofluoroolefins (HFO) may include monofluoropropene, trifluoropropene, tetrafluoropropene, pentafluoropropene, and hexafluorobutene. Examples of saturated hydrocarbons may include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane.

The working medium may further contain a disproportionation inhibitor for suppressing a disproportionation reaction of the ethylene-based fluoroolefin. Examples of the disproportionation inhibitor may include a saturated hydrocarbon or a haloalkane. Examples of saturated hydrocarbons may include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane. In the above examples, n-propane is preferred. Examples of haloalkanes may include haloalkanes having one or two carbon atoms. Examples of haloalkanes having one carbon atom (i.e., halomethanes) may include (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (Cl₄), carbon tetrabromide (CBr₄), bromotrichloromethane (CBrCl₃), dibromodichloromethane (CBr₂Cl₂), tribromofluoromethane (CBr₃F), fluorodiiodomethane (CHFl₂), difluorodiiodomethane (CF₂I₂), dibromodifluoromethane (CBr₂F₂), trifluoroiodomethane (CF₃I), and difluoroiodomethane (CHF₂I). Examples of haloalkanes with two carbon atoms (i.e. haloethanes) may include 1,1,1-trifluoro-2-iodoethane (CF₃CH₂I), monoiodoethane (CH₃CH₂I), monobromoethane (CH₃CH₂Br), and 1,1,1-triiodoethane (CH₃Cl₃). The working medium may contain one or more types of haloalkanes having 1 or 2 carbon atoms. In other words, the haloalkanes having 1 or 2 carbon atoms may be used alone or in combination of two or more types.

Here, an experiment was conducted to verify the occurrence of a disproportionation reaction using a working medium containing 1,1,2-trifluoroethylene (HFO-1123). In the disproportionation reaction experiment, a tightly sealed high-pressure vesssel (tightly sealed vessel made with stainless steel, internal volume: 50 mL) was equipped with a pressure sensor (GC61, manufactured by Nagano Keiki Co., Ltd.) for measuring the internal pressure of the high-pressure vessel, a thermocouple (PL Thermocouple Grand PL-18-K-A 4-T, manufactured by Conax Technologies) for measuring the internal temperature of the high-pressure vessel, and a discharge device for generating discharge inside the high-pressure vessel. Furthermore, a gas cylinder of 1,1,2-trifluoroethylene was connected so that the pressure could be adjusted. In addition, a mantle heater was installed to heat the entire high-pressure vessel, and a ribbon heater (Flexible Ribbon Heater 1 m, 200 W, manufactured by Tokyo Research Institute Co., Ltd.) was installed to heat the piping section as well. In this way, the experimental system for the disproportionation reaction was constructed.

TABLE 1 below shows the occurrence or non-occurrence of a disproportionation reaction when using as the working medium: pure 1,1,2-trifluoroethylene; a mixed gas adjusted so that the content of 1,1,2-trifluoroethylene is 80 mass% and that of n-propane is 20 mass%; a mixed gas adjusted so that the content of 1,1,2-trifluoroethylene is 91.5 mass%, n-propane is 7.5 mass%, and difluoroiodomethane is 1.0 mass%; and a mixed gas adjusted so that the content of 1,1,2-trifluoroethylene is 69.5 mass%, difluoromethane is 22 mass%, n-propane is 7.5 mass%, and difluoroiodomethane is 1.0 mass%. The pressure was adjusted to 2 MPa for Examples 1 to 2, and to 6 MPa for Examples 3 to 5. The peak current in TABLE 1 is the maximum value of the current flowing during discharge occurreces. The number of discharge occurrences is the number of times discharge has been generated at fixed intervals under the given conditions, and if a disproportionation reaction was observed after that number of times, "Yes" is indicated under "Occurrence of Disproportionation Reaction"; if no disproportionation reaction was observed, "No" is indicated.

**[TABLE 1]**

| | Gas-type | GWP | Peak current [A] | Number of discharge occurrences | occurrence or non-occurrence of disproportionation reaction |
|---|---|---|---|---|---|
| Example 1 | HFO1123 (100 mass%) | <10 | 80 | > 15 | No |
| Example 2 | HFO1123 (100 mass%) | <10 | 135 | 2 | Yes |
| Example 3 | HFO1123/n-propane = 80/20 mass% | <10 | 100 | > 70 | No |
| Example 4 | HFO1123/n-propane/difluoroiodomethane = 91.5/7.5/1.0 mass% | <10 | 100 | > 27 | No |
| Example 5 | HFO1123/difluoromethane/ n-propane/difluoroiodometha ne= 69.5/22/7.5/1.0 mass% | <150 | 100 | > 66 | No |

From TABLE 1, in Example 1, no disproportionation reaction was observed. Therefore, even when multiple consecutive discharges with a peak current of about 80 A were performed, a disproportionation reaction did not occur. As shown in Example 2, when the peak current was large, results indicating the occurrence of a disproportionation reaction were acquired after two consecutive discharges. Thus, the presence or absence of a disproportionation reaction varies depending on the magnitude of the peak current. To suppress disproportionation reactions, it is preferable to keep the peak current below 135 A.

From TABLE 1, in Example 3, no disproportionation reaction was observed with a working medium of a mixed gas containing n-propane as a disproportionation inhibitor. Therefore, it was confirmed that even when multiple consecutive discharges with a peak current of about 100 A were performed in a working medium containing n-propane as a disproportionation inhibitor, the possibility of a disproportionation reaction occurring was extremely low. This indicates that, in order to suppress disproportionation reactions in a working medium of a mixed gas containing a disproportionation inhibitor, it is preferable to keep the peak current below 135 A.

From TABLE 1, in Example 4, no disproportionation reaction was observed with a working medium of a mixed gas containing both n-propane and difluoroiodomethane as disproportionation inhibitors. Therefore, it was confirmed that even in a working medium containing both n-propane and difluoroiodomethane as disproportionation inhibitors, the possibility of a disproportionation reaction occurring was extremely low when multiple consecutive discharges with a peak current of about 100 A were performed. This indicates that, in order to suppress disproportionation reactions in a working medium of a mixed gas containing two or more disproportionation inhibitors, it is preferable to keep the peak current below 135 A.

From TABLE 1, in Example 5, no disproportionation reaction was observed with a working medium of a mixed gas containing n-propane and difluoromethane as disproportionation inhibitors and difluoroiodomethane as an auxiliary refrigerant component. Therefore, it was confirmed that even in a working medium containing two or more disproportionation inhibitors and an auxiliary refrigerant component that does not cause disproportionation, the possibility of a disproportionation reaction occurring was extremely low when multiple consecutive discharges with a peak current of about 100 A were performed. This indicates that, in order to suppress disproportionation reactions in a working medium of a mixed gas containing two or more disproportionation inhibitors and at least one auxiliary refrigerant, it is preferable to keep the peak current below 135 A.

The refrigeration cycle circuit 2 includes a compressor 4, a first heat exchanger 5, an expansion valve 6, a second heat exchanger 7, and a four-way valve 8.

The refrigeration cycle device 1 includes an outdoor unit 1a and an indoor unit 1b. The outdoor unit 1a includes the control device 3, the compressor 4, the first heat exchanger 5, the expansion valve 6, and the four-way valve 8. The outdoor unit 1a further includes a first air blower 5a for facilitating heat exchange at the first heat exchanger 5. The indoor unit 1b includes the second heat exchanger 7. The indoor unit 1b further includes a second air blower 7a for facilitating heat exchange at the second heat exchanger 7.

**In** the refrigeration cycle circuit 2, the compressor 4 compresses the working medium to increase a pressure of the working medium. The compressor 4 would be described in detail later. The first heat exchanger 5 and the second heat exchanger 7 enable heat exchange between the working medium circulating in the refrigeration cycle circuit 2 and external air (e.g., the outdoor air or the indoor air). The expansion valve 6 regulates the pressure (evaporation pressure) of the working medium and regulates a flow volume of the working medium. The four-way valve 8 switches a direction of the working medium circulating in the refrigeration cycle circuit 2 between a first direction corresponding to the cooling operation and a second direction corresponding to the heating operation.

**In** the present embodiment, as shown by a solid arrow A1 in Fig. 1, the first direction is a direction in which the working medium circulates in the refrigeration cycle circuit 2 in the order of the compressor 4, the first heat exchanger 5, the expansion valve 6, and the second heat exchanger 7.

**In** the cooling operation, the compressor 4 compresses and discharges the gaseous working medium, and thus the gaseous working medium is sent to the first heat exchanger 5 through the four-way valve 8. The first heat exchanger 5 conducts heat exchange between the outdoor air and the gaseous working medium and then the gaseous working medium is condensed to be liquefied. The liquid working medium is decompressed by the expansion valve 6 and is sent to the second heat exchanger 7. The second heat exchanger 7 conducts heat exchange between the liquid working medium and the indoor air, and then the gaseous working medium evaporates to become the gaseous working medium. The gaseous working medium returns to the compressor 4 through the four-way valve 8. **In** the cooling operation, the first heat exchanger 5 functions as a condenser, and the second heat exchanger 7 functions as an evaporator. Thus, the indoor unit 1b sends air cooled via heat exchange at the second heat exchanger 7 to an interior during cooling.

In the present embodiment, as shown by a broken arrow A2 in Fig. 1, the second direction is a direction in which the working medium circulates in the refrigeration cycle circuit 2 in the order of the compressor 4, the second heat exchanger 7, the expansion valve 6, and the first heat exchanger 5.

In the heating operation, the compressor 4 compresses and discharges the gaseous working medium, and thus the gaseous working medium is sent to the second heat exchanger 7 through the four-way valve 8. The second heat exchanger 7 conducts heat exchange between the indoor air and the gaseous working medium and then the gaseous working medium is condensed to be liquefied. The liquid working medium is decompressed by the expansion valve 6 and is sent to the first heat exchanger 5. The first heat exchanger 5 conducts heat exchange between the liquid working medium and the outdoor air, and then the gaseous working medium evaporates to become the gaseous working medium. The gaseous working medium returns to the compressor 4 through the four-way valve 8. In the heating operation, the second heat exchanger 7 functions as a condenser, and the first heat exchanger 5 functions as an evaporator. Thus, the indoor unit 1b sends air warmed via heat exchange at the second heat exchanger 7 to an interior during the heating.

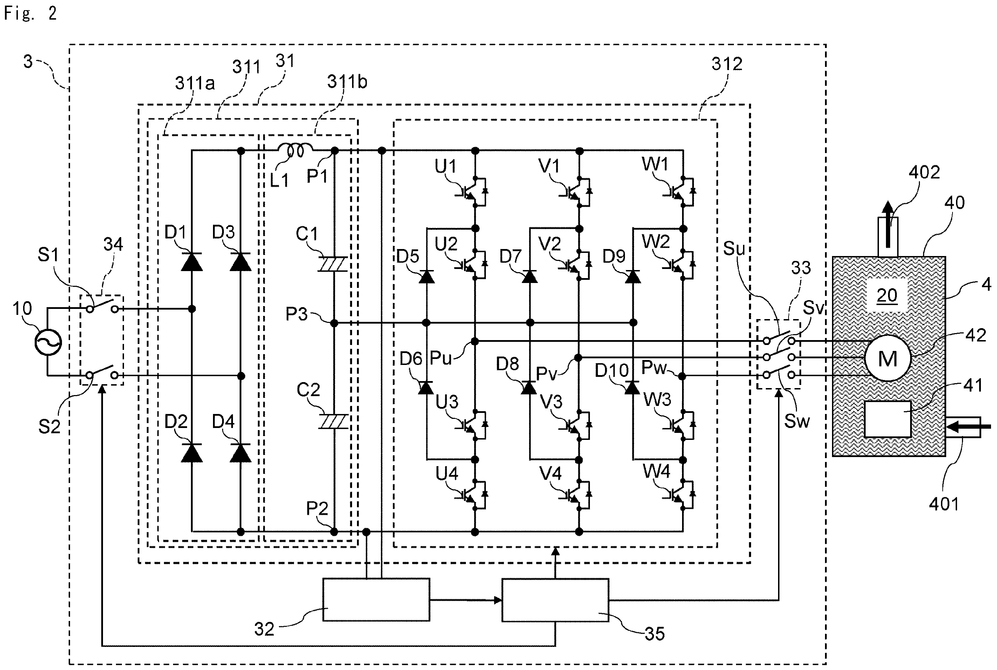

The control device 3 is configured to control the compressor 4 of the refrigeration cycle circuit 2. Fig. 2 is a schematic view of the compressor 4 and the control device 3.

The compressor 4 is, for example, a hermetically sealed compressor. The compressor 4 may be of a rotary type, a scroll type, or other well-known type. The compressor 4 includes a tightly sealed vessel 40, a compression mechanism 41, and an electric motor 42.

The tightly sealed vessel 40 constitutes a fluidic pathway for the working medium 20. The tightly sealed vessel 40 includes a suction pipe 401 and a discharge pipe 402. The working medium 20 is suctioned into the tightly sealed vessel 40 via the suction pipe 401 and then is compressed by the compression mechanism 41 and thereafter is discharged to an exterior of the tightly sealed vessel 40 via the discharge pipe 402. The inside of the tightly sealed vessel 40 is filled with the working medium 20 with a high temperature and a high pressure together with a lubricating oil. The tightly sealed vessel 40 has a bottom portion which constitutes an oil reservoir for storing a mixed liquid of the working medium 20 and the lubricating oil.

The compression mechanism 41 is positioned inside the tightly sealed vessel 40 to compress the working medium. The compression mechanism 41 may have a conventional configuration. For example, the compression mechanism 41 may include a cylinder forming a compression chamber, a rolling piston disposed in the compression chamber inside the cylinder, and a crank shaft coupled to the rolling piston.

The electric motor 42 is positioned inside the tightly sealed vessel 40 to operate the compression mechanism 41. The electric motor 42 is a blushless motor (three-phase brushless motor). The electric motor 42 includes a rotator fixed to the crank shaft of the compression mechanism 41 and a stator provided in a vicinity of the rotator, for example. The stator is configured by concentrated or distributed winding of the stator windings (magnet wires) around a stator core (electrical or magnetic steel sheet or the like) with an insulation paper in-between. The stator windings are covered with insulating material. Examples of the insulating material may include polyethylene terephthalate (PET), polyethylene naphthalate (PEN), aramid polymer, polyphenylene sulfide (PPS), and polytetrafluoroethylene (PTFE).

The compressor 4 may include an accumulator for preventing liquid compression in the compression chamber of the compression mechanism 41. The accumulator separates the working medium into the gaseous working medium and the liquid working medium and directs only the gaseous working medium to the tightly sealed vessel 40 via the suction pipe 401.

The control device 3 includes a drive circuit 31, a state detection circuit 32, a first protective circuit 33, a second protective circuit 34, and a control circuit 35.

The drive circuit 31 is configured to drive the electric motor 42 based on input power from a power supply 10. In the present embodiment, the power supply 10 is an alternating current power supply and the input power is AC power. The drive circuit 31 includes a converter circuit 311 and an inverter circuit 312.

The converter circuit 311 is configured to output DC output power based on the input power from the power supply 10. In detail, the converter circuit 311 is configured to output the DC output power so that a voltage of the DC output power becomes a first voltage based on the input power from the power supply 10. This means that the converter circuit 311 converts the input power into the DC output power so that the voltage of the DC output power becomes the first voltage. The first voltage corresponds to a rated voltage of the drive circuit 31.

The converter circuit 311 includes a rectification circuit 311a and a smoothing circuit 311b.

The rectification circuit 311a is a diode bridge constituted by a plurality of diodes D1 to D4. The power supply 10 is connected between input terminals (a connecting point between the diodes D1, D2 and a connecting point between the diodes D3, D4) of the rectification circuit 311a and the smoothing circuit 311b is connected between output terminals (a connecting point between the diodes D1, D3 and a connecting point between the diodes D2, D4) of the rectification circuit 311a.

The smoothing circuit 311b smooths a voltage between the output terminals of the rectification circuit 311a to output it. By the smoothing circuit 311b, the voltage of the DC output power is set to the first voltage. The smoothing circuit 311b includes a series circuit of an inductor L1 and smoothing capacitors C1 and C2. In the smoothing circuit 311b, a connecting point between the inductor L1 and the smoothing capacitor C1 corresponds to a first output point P1 outputting a voltage corresponding to the first voltage. In the smoothing circuit 311b, a connecting point between a connecting point between the diodes D2, D4 and the smoothing capacitor C2 corresponds to a second output point P2 outputting a voltage lower than the voltage at the first output point P1. The first output point P1 and the second output point P2 define the voltage of the DC output power. This means that the voltage between the first and second output points P1 and P2 corresponds to the voltage of the DC output power. In the smoothing circuit 311b, a connecting point between the connecting point between the diodes D2, D4 and the smoothing capacitor C2 corresponds to a second output point P2 outputting a voltage lower than the voltage at the first output point P1. In the smoothing circuit 311b, a connecting point between the smoothing capacitor C1 and the smoothing capacitor C2 corresponds to a third output point P3 outputting a voltage between the voltage at the first output point P1 and the voltage at the second output point P2. In a relation among the first output point P1, the second output point P2 and the third output point P3, the first output point P1 is a high voltage side output point (high voltage point), the second output point P2 is a low voltage side output point (low voltage point) and the third output point P3 is a intermediate voltage point. In the smoothing circuit 311b, the smoothing capacitor C1 and the smoothing capacitor C2 have the same capacitance. Therefore, a voltage between the first output point P1 and the third output point P3 and a voltage between the second output point P2 and the third output point P3 are equal. If the voltage between the first output point P1 and the second output point P2 (which corresponds to the first voltage) is denoted as E, then the voltage between the first output point P1 and the third output point P3 is E/2, and similarly, the voltage between the second output point P2 and the third output point P3 is also E/2. Accordingly, the drive circuit 31 is capable of providing five voltage levels: E, E/2, 0, -E/2, and -E.

The inverter circuit 312 outputs AC output power to the electric motor 42 based on the DC output power from the converter circuit 311. In the present embodiment, the AC output power is three-phase AC power. The inverter circuit 312 includes a plurality of semiconductor switching elements U1 to U4, V1 to V4, and W1 to W4.

Each set of the semiconductor switching elements U1 to U4, V1 to V4, and W1 to W4 forms a series circuit and is connected between the first output point P1 and the second output point P2.

A connecting point between the semiconductor switching elements U1 and U2, a connecting point between the semiconductor switching elements V1 and V2, and a connecting point between the semiconductor switching elements W1 and W2 are connected to the third output point P3 via diodes D5, D7, and D9, respectively.

Anodes of the diodes D5, D7, and D9 are connected to the third output point P3, and cathodes of the diodes D5, D7, and D9 are connected to a connecting point between the semiconductor switching elements U1 and U2, a connecting point between the semiconductor switching elements V1 and V2, and a connecting point between the semiconductor switching element W1 and W2, respectively.

A connecting point between the semiconductor switching elements U2 and U3 constitutes a U-phase output terminal Pu, which is connected to a U-phase input terminal of the electric motor 42. A connecting point between the semiconductor switching elements V2 and V3 constitutes a V-phase output terminal Pv, which is connected to a V-phase input terminal of the electric motor 42. A connecting point between the semiconductor switching elements W2 and W3 constitutes a W-phase output terminal Pw, which is connected to a W-phase input terminal of the electric motor 42.

A connecting points between the semiconductor switching elements U3 and U4, a connecting points between the semiconductor switching elements V3 and V4, and a connecting points between the semiconductor switching elements W3 and W4 are connected to the third output point P3 via diodes D6, D8, and D10, respectively.

Cathodes of the diodes D6, D8, and D10 are connected to the third output point P3, and anodes of the diodes D6, D8, and D10 are connected to a connecting points between the semiconductor switching elements U3 and U4, a connecting points between the semiconductor switching elements V3 and V4, and a connecting points between the semiconductor switching elements W3 and W4, respectively.

In the present embodiment, the maximum allowable current of each of the plurality of semiconductor switching devices U1 to U4, V1 to V4, and W1 to W4 is set based on instantaneous abnormal currents, such as instantaneous discharge currents, caused by abnormalities (arc discharge, layer short, etc.) in the drive circuit 31 or the compressor 4. Through tests and other means, the present inventors have found that, in many cases, the value of such instantaneous abnormal currents lasting a few microseconds to sub-milliseconds is 135 A. In view of this, the plurality of semiconductor switching elements U1 to U4, V1 to V4, W1 to W4 are arranged to include one or more protective semiconductor switching elements with a maximum allowable current smaller than 135 A. Namely, when an instantaneous abnormal current occurs, the protective semiconductor switching device is destroyed by the abnormal current, and current is interrupted at the protective semiconductor switching device. As a result, the outputting the AC output power from the drive circuit 31 to the motor 42 is limited or interrupted. This configuration can shorten the time from the occurrence of the abnormal current to the limitation or interruption of outputting the AC output power, thereby improving the suppression of disproportionation reactions of the working medium 20. The maximum allowable current of the protective semiconductor switching device may be 130 A or less, 120 A or less, 110 A or less, or 100 A or less. The smaller the maximum allowable current, the shorter the time until the protective semiconductor switching device is damaged by the abnormal current, and it is expected that the likelihood of damage to the protective semiconductor switching device due to abnormal current increases. However, it is desirable that the maximum allowable current of the protective semiconductor switching device be set so that the protective semiconductor switching device is not destroyed under normal operating conditions.

In the present embodiment, the maximum allowable current of each of the semiconductor switching elements U1, U4, V1, V4, W1, and W4 is smaller than 135 A. The maximum allowable current of each of the semiconductor switching elements U2, U3, V2, V3, W2, ad W3 is not smaller than 135 A. The semiconductor switching elements U1, U4, V1, V4, W1, and W4 serve as protective semiconductor switching elements.

In the inverter circuit 312, the semiconductor switching elements U1, U2, V1, V2, W1, and W2 constitute first semiconductor switching element groups connected between the first output point P1 and the electric motor 42. The semiconductor switching elements U3, U4, V3, V4, W3, and W4 constitute second semiconductor switching element groups connected between the second output point P2 and the electric motor 42.

The semiconductor switching elements U1 and U2 constitute a U-phase first semiconductor switching element group connected between the first output point P1 and the U-phase input terminal of the electric motor 42. The U-phase first semiconductor switching element group forms a series circuit of the semiconductor switching elements U1 and U2 and includes the semiconductor switching element U1 serving as a protective semiconductor switching element. Among the semiconductor switching elements U1 and U2, the semiconductor switching element U1 is a semiconductor switching element closer to the first output point P1.

The semiconductor switching elements U3 and U4 constitute a U-phase second semiconductor switching element group connected between the second output point P2 and the U-phase input terminal of the electric motor 42. The U-phase second semiconductor switching element group forms a series circuit of the semiconductor switching elements U3 and U4 and includes the semiconductor switching element U4 serving as a protective semiconductor switching element. Among the semiconductor switching elements U3 and U4, the semiconductor switching element U4 is a semiconductor switching element closer to the second output point P2.

TABLE 2 below shows a relation between the ON or OFF states of the semiconductor switching elements U1 to U4 and the U-phase output voltage Vu at the U-phase output terminal Pu. In TABLE 2, with regard to the semiconductor switching elements U1 to U4, "1" denotes the ON state and "0" denotes the OFF state. The value of the U-phase output voltage Vu is given by a potential difference between the first output point P1 and the second output point P2 being E and the voltage at the third output point P3 being zero.

**[TABLE 2]**

| U1 | U2 | U3 | U4 | Vu |
|---|---|---|---|---|
| 1 | 1 | 0 | 0 | E/2 |
| 0 | 1 | 1 | 0 | 0 |
| 0 | 0 | 1 | 1 | -E/2 |

TABLE 2 above demonstrates that assigning the semiconductor switching elements U1 and U4 as protective semiconductor switching elements enables efficient prevention of abnormal currents.

The semiconductor switching elements V1 and V2 constitute a V-phase first semiconductor switching element group connected between the first output point P1 and the V-phase input terminal of the electric motor 42. The V-phase first semiconductor switching element group forms a series circuit of the semiconductor switching elements V1 and V2 and includes the semiconductor switching element V1 serving as a protective semiconductor switching element. Among the semiconductor switching elements V1 and V2, the semiconductor switching element V1 is a semiconductor switching element closer to the first output point P1.

The semiconductor switching elements V3 and V4 constitute a V-phase second semiconductor switching element group connected between the second output point P2 and the V-phase input terminal of the electric motor 42. The V-phase second semiconductor switching element group forms a series circuit of the semiconductor switching elements V3 and V4 and includes the semiconductor switching element V4 serving as a protective semiconductor switching element. Among the semiconductor switching elements V3 and V4, the semiconductor switching element V4 is a semiconductor switching element closer to the second output point P2.

TABLE 3 below shows a relation between the ON or OFF states of the semiconductor switching elements V1 to V4 and the V-phase output voltage Vv at the V-phase output terminal Pv. In TABLE 3, with regard to the semiconductor switching elements V1 to V4, "1" denotes the ON state and "0" denotes the OFF state. The value of the V-phase output voltage Vv is given by a potential difference between the first output point P1 and the second output point P2 being E and the voltage at the third output point P3 being zero.

**[TABLE 3]**

| V1 | V2 | V3 | V4 | Vv |
|---|---|---|---|---|
| 1 | 1 | 0 | 0 | E/2 |
| 0 | 1 | 1 | 0 | 0 |
| 0 | 0 | 1 | 1 | -E/2 |

TABLE 3 above demonstrates that assigning the semiconductor switching elements V1 and V4 as protective semiconductor switching elements enables efficient prevention of abnormal currents.

The semiconductor switching elements W1 and W2 constitute a W-phase first semiconductor switching element group connected between the first output point P1 and the W-phase input terminal of the electric motor 42. The W-phase first semiconductor switching element group forms a series circuit of the semiconductor switching elements W1 and W2 and includes the semiconductor switching element W1 serving as a protective semiconductor switching element. Among the semiconductor switching elements W1 and W2, the semiconductor switching element W1 is a semiconductor switching element closer to the first output point P1.

The semiconductor switching elements W3 and W4 constitute a W-phase second semiconductor switching element group connected between the second output point P2 and the W-phase input terminal of the electric motor 42. The W-phase second semiconductor switching element group forms a series circuit of the semiconductor switching elements W3 and W4 and includes the semiconductor switching element W4 serving as a protective semiconductor switching element. Among the semiconductor switching elements W3 and W4, the semiconductor switching element W4 is a semiconductor switching element closer to the second output point P2.

TABLE 4 below shows a relation between the ON or OFF states of the semiconductor switching elements W1 to W4 and the W-phase output voltage Vw at the W-phase output terminal Pw. In TABLE 4, with regard to the semiconductor switching elements W1 to W4, "1" denotes the ON state and "0" denotes the OFF state. The value of the W-phase output voltage Vw is given by a potential difference between the first output point P1 and the second output point P2 being E and the voltage at the third output point P3 being zero.

**[TABLE 4]**

| W1 | W2 | W3 | W4 | Wv |
|---|---|---|---|---|
| 1 | 1 | 0 | 0 | E/2 |
| 0 | 1 | 1 | 0 | 0 |
| 0 | 0 | 1 | 1 | -E/2 |

TABLE 4 above demonstrates that assigning the semiconductor switching elements W1 and W4 as protective semiconductor switching elements enables efficient prevention of abnormal currents.

The semiconductor switching elements U2, U3, V2, V3, W2, and W3 constitute a third semiconductor switching element group connected between the third output point P3 and the electric motor 42. In particular, the semiconductor switching elements U2 and U3 constitute a U-phase third semiconductor switching element group connected between the third output point P3 and the U-phase input terminal of the electric motor 42. The semiconductor switching elements V2 and V3 constitute a V-phase third semiconductor switching element group connected between the third output point P3 and the V-phase input terminal of the electric motor 42. The semiconductor switching elements W2 and W3 constitute a W-phase third semiconductor switching element group connected between the third output point P3 and the W-phase input terminal of the electric motor 42.

The converter circuit 311 has a plurality of output points, including the first to third output points P1 to P3. The inverter circuit 312 includes a plurality of semiconductor switching element groups: the first semiconductor switching element group (the semiconductor switching elements U1, U2, V1, V2, W1, W2) connected between the first output point P1 and the electric motor 42; the second semiconductor switching element group (the semiconductor switching elements U3, U4, V3, V4, W3, W4) connected between the second output point P2 and the electric motor 42; and the third semiconductor switching element group (the semiconductor switching elements U2, U3, V2, V3, W2, W3) connected between the third output point P3 and the electric motor 42. The drive circuit 31 is a so-called multilevel inverter, specifically a three-level inverter.

As mentioned above, the plurality of semiconductor switching elements U1 to U4, V1 to V4, and W1 to W4 include, for each phase of the AC output power, a first semiconductor switching element group connected between the first output point P1 and the electric motor 42, and a second semiconductor switching element group connected between the second output point P2 and the electric motor 42. Each of the first semiconductor switching element group and the second semiconductor switching element group includes one or more protective semiconductor switching elements. According to this configuration, in any phase of the AC output power, the protective semiconductor switching device is destroyed by the abnormal current, and current is interrupted at the protective semiconductor switching device. Thus, the possibility of abnormal phenomena caused by abnormal currents can be reduced, and the suppression of the disproportionation reaction of the working medium 20 can be improved.

In the inverter circuit 312, the semiconductor switching elements U1 to U4, V1 to V4, and W1 to W4 are, for example, transistors. Examples of the transistors include IGBTs (Insulated Gate Bipolar Transistors), MOSFETs (Metal-Oxide-Semiconductor Field-Effect Transistors), and bipolar transistors. Examples of IGBTs include Si-IGBTs and SiC-IGBTs. Examples of MOSFETs include Si-MOSFETs and SiC-MOSFETs. In the present embodiment, each of the semiconductor switching elements U1 to U4, V1 to V4, and W1 to W4 is an IGBT.

The state detection circuit 32 is configured to detect the state of the drive circuit 31. The state of the drive circuit 31 is the voltage of the DC output power of the converter circuit 311. In the present embodiment, the state detection circuit 32 is a voltage detector that detects the DC output power of the converter circuit 311 and outputs a detection voltage indicating the voltage of the DC output power. In the present embodiment, the state detection circuit 32 includes a voltage divider circuit connected between the output terminals of the smoothing circuit 311b of the converter circuit 311, that is, between the first output point P1 and the second output point P2, and outputs the detection voltage based on a voltage acquired from the voltage divider circuit. The state detection circuit 32 may also output the detection voltage based on outputs of the voltage divider circuit and a differential amplifier. As an example, a non-inverting input terminal and an inverting input terminal of the differential amplifier are connected to both ends of a resistor of the voltage divider circuit, respectively, so that the differential amplifier can output the voltage across the resistor as the detection voltage. By using a differential amplifier, it is possible to detect the potential difference in a floating state, thereby improving the accuracy of the detection voltage. The position at which the state detection circuit 32 is connected to the drive circuit 31 is not particularly limited as long as the DC output power of the converter circuit 311 can be detected. The position for detecting the DC output power of the converter circuit 311 is not limited to inside the converter circuit 311; it may also be at a position inside the inverter circuit 312 that is circuit-equivalent to each of the first output point P1 and the second output point P2. The voltage divider circuit may adopt a conventionally known configuration, so detailed explanation is omitted.

The first protective device 33 is provided to interrupt outputting the AC output power. The first protective device 33 includes switches Su, Sv, and Sw, which are interposed between the drive circuit 31 and the electric motor 42. The switches Su, Sv, and Sw are connected between the input terminals of the U phase, V phase, and W phase of the electric motor 42 and the U-phase output terminal Pu, the V-phase output terminal Pv, and the W-phase output terminal Pw, respectively. The switches Su, Sv, and Sw may be, for example, controllable switches such as semiconductor switches, electromagnetic relays. In an ON state, where the switches Su, Sv, and Sw are closed, the first protective device 33 allows outputting the AC output power from the drive circuit 31 to the electric motor 42, and in an OFF state, where the switches Su, Sv, and Sw are open, it interrupts outputting the AC output power from the drive circuit 31 to the electric motor 42.

The second protective device 34 is provided to interrupt inputting the input power. The second protective device 34 includes switches S1 and S2, which are interposed between the drive circuit 31 and the power supply 10. The switches S1 and S2 are connected between the input terminals of the rectification circuit 311a and the power supply 10, respectively. The switches S1 and S2 may be, for example, controllable switches such as semiconductor switches, electromagnetic relays. In an ON state, where the switches S1 and S2 are closed, the second protective device 34 allows inputting the input power from the power supply 10 to the drive circuit 31, and in an OFF state, where the switches S1 and S2 are open, it interrupts inputting the input power from the power supply 10 to the drive circuit 31.

The control circuit 35 may be implemented by a computer system including at least one processor (microprocessor) and at least one memory. The computer system may also include one or more A/D converters. For example, one or more A/D converters may be used to convert the detection voltage from the state detection circuit 32 from analog format to digital format. The control circuit 35 controls the drive circuit 31, the first protective device 33, and the second protective device 34. Specifically, the control circuit 35 performs PWM control of the plurality of semiconductor switching element groups of the inverter circuit 312 of the drive circuit 31 to allow the drive circuit 31 to operate the electric motor 42. More specifically, the control circuit 35 controls the switching of the plurality of semiconductor switching elements U1 to U4, V1 to V4, and W1 to W4 of the inverter circuit 312 of the drive circuit 31 so that the inverter circuit 312 supplies AC output power (three-phase AC power) to the electric motor 42 based on the DC output power from the smoothing circuit 311b.

The semiconductor switching elements U1 to U4 have a first state in which the semiconductor switching elements U1 and U2 are ON and the semiconductor switching elements U3 and U4 are OFF, a second state in which the semiconductor switching elements U3 and U4 are ON and the semiconductor switching elements U1 and U2 are OFF, and a third state in which the semiconductor switching elements U2 and U3 are ON and the semiconductor switching elements U1 and U4 are OFF. The voltage at the U-phase output terminal Pu is E/2 in the first state, -E/2 in the second state, and 0 in the third state.

The semiconductor switching elements V1 to V4 have a first state in which the semiconductor switching elements V1 and V2 are ON and the semiconductor switching elements V3 and V4 are OFF, a second state in which the semiconductor switching elements V3 and V4 are ON and the semiconductor switching elements V1 and V2 are OFF, and a third state in which the semiconductor switching elements V2 and V3 are ON and the semiconductor switching elements V1 and V4 are OFF. The voltage at the V-phase output terminal Pv is E/2 in the first state, -E/2 in the second state, and 0 in the third state.

The semiconductor switching elements W1 to W4 have a first state in which the semiconductor switching elements W1 and W2 are ON and the semiconductor switching elements W3 and W4 are OFF, a second state in which the semiconductor switching elements W3 and W4 are ON and the semiconductor switching elements W1 and W2 are OFF, and a third state in which the semiconductor switching elements W2 and W3 are ON and the semiconductor switching elements W1 and W4 are OFF. The voltage at the W-phase output terminal Pw is E/2 in the first state, -E/2 in the second state, and 0 in the third state.

In this way, the drive circuit 31 can provide five voltage levels: E, E/2, 0, -E/2, and -E.

The control circuit 35 controls the switching of the semiconductor switching elements U1 to U4, V1 to V4, and W1 to W4 of the inverter circuit 312 of the drive circuit 31, based on, for example, the U-phase, V-phase, and W-phase output voltage command values respectively corresponding to the U-phase, V-phase, and W-phase sinusoidal AC voltages of the three-phase AC, as well as first and second carrier triangular waves. A value of the first carrier triangular wave is greater than or equal to 0, and a value of the second carrier triangular wave is less than or equal to 0. Since the drive circuit 31 can provide five-level voltages of E, E/2, 0, -E/2, and -E, the voltage between the U-phase input terminal and the V-phase input terminal of the electric motor 42, the voltage between the V-phase input terminal and the W-phase input terminal of the electric motor 42, and the voltage between the W-phase input terminal and the U-phase input terminal of the electric motor 42 can each be made closer to a sinusoidal waveform.

The control circuit 35 further performs a process for suppressing the disproportionation reaction of the working medium 20 that circulates in the refrigeration cycle circuit 2, based on the detected voltage from the state detection circuit 32.

It is considered that factors of the disproportionation reaction of the working medium 20 are heat and radicals. For example, when radicals are generated under high temperature and high pressure, it is assumed that the disproportionation reaction of the working medium 20 proceeds. The radicals may possibly be generated by a discharge phenomenon occurring, for example, when some abnormality happens in the compressor 4 or the drive circuit 31.

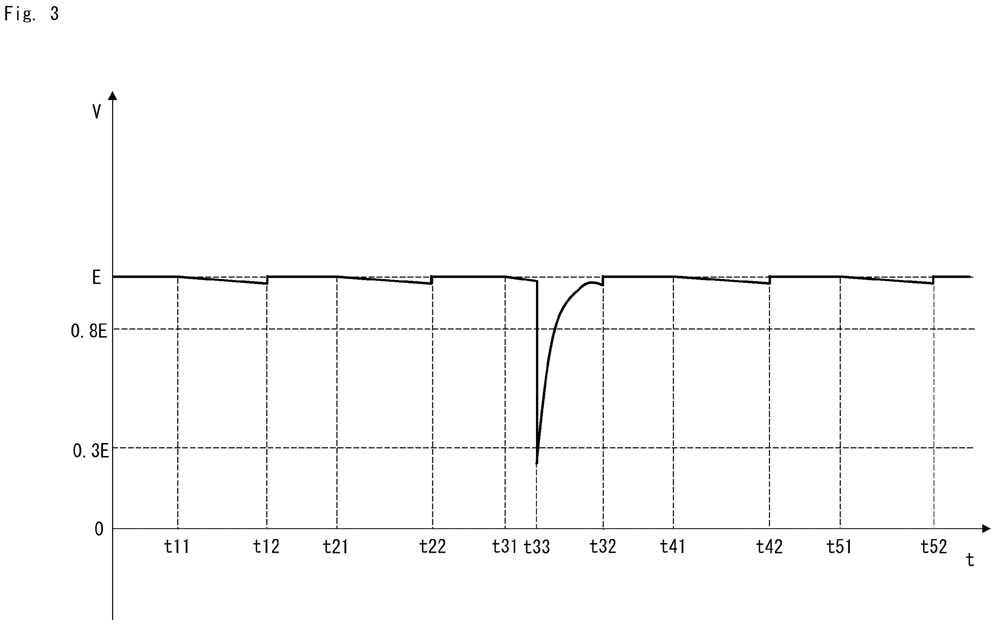

The present inventors found that when a discharge phenomenon occurs in the compressor 4, the voltage of the DC output power of the converter circuit 311, that is, the voltage of the smoothing circuit 311b of the drive circuit 31, undergoes an abrupt change. Fig. 3 shows a waveform diagram of the DC output voltage of the converter circuit 311. In Fig. 3, during times t11 to t12, t21 to t22, t31 to t32, t41 to t42, and t51 to t52, the DC output voltage gently decreases, which is due to switching of the semiconductor switching elements U1 to U4, V1 to V4, W1 to W4 of the inverter circuit 312. When the switching frequency of the inverter circuit 312 is, for example, 1.0 kHz to 5.0 kHz, the time between the times t11 and t21 is about 0.2 to 1.0 ms. Here, at the time t33, a steep drop in the DC output voltage is observed, and this is considered to result from the occurrence of a discharge phenomenon.

From this perspective, the control circuit 35 determines whether a discharge phenomenon has occurred based on the detection voltage from the state detection circuit 32, and when it is determined that a discharge phenomenon is occurring, the control circuit 35 interrupts or limits the operation of the drive circuit 31 so as to suppress the disproportionation reaction of the working medium circulating in the refrigeration cycle circuit 2.

In the control device 3, detection of the sign of the disproportionation reaction is carried out not based on changes in the actual current flowing from the drive circuit 31 to the electric motor 42, but instead based on changes in the DC output power (the voltage of the smoothing circuit 311b) within the drive circuit 31. The timescale of a discharge phenomenon is shorter than the timescale for smoothing (rectification) in the drive circuit 31. For example, the timescale of a discharge phenomenon is on the order of microseconds. Therefore, it is possible to determine whether a discharge phenomenon has occurred by monitoring the DC output power within the drive circuit 31. Moreover, measurement of the DC output power (the voltage of the smoothing circuit 311b) within the drive circuit 31 can be conducted in a shorter time and with shorter cycles than measurement of the actual current flowing from the drive circuit 31 to the electric motor 42. This enables earlier detection of the sign of the disproportionation reaction of the working medium 20. In this way, if the sign of the disproportionation reaction of the working medium 20 can be detected at an earlier stage, suppression of the disproportionation reaction can also be initiated earlier, thereby improving the effectiveness of the disproportionation reaction suppression.

In the present embodiment, when the detection voltage falls below a second voltage that is lower than the first voltage, the control circuit 35 interrupts or limits the operation of the drive circuit 31. The second voltage is set in order to determine whether a discharge phenomenon has occurred due to some abnormality in the compressor 4 or the drive circuit 31. Referring to Fig. 3, if the normal voltage (the first voltage) of the DC output current is taken as E, it is observed that, due to a discharge phenomenon, the voltage of the DC output current drops to 0.8E or less, and sometimes as low as 0.3E or less. From this point, it is preferable that the second voltage be between 0.3 and 0.8 times the first voltage, inclusive. In the present embodiment, the second voltage is set at 0.8 times the first voltage.

The interrupting the operation of the drive circuit 31 can be realized by any of interrupting outputting the AC output power, interrupting outputting the DC output power, or interrupting inputting the input power. The limiting the operation of the drive circuit 31 can be realized by reducing a setting value of an amplitude of the AC output power or reducing a setting value of a frequency of the AC output power.

In the present embodiment, the control circuit 35 sets the first protective device 33 to the OFF state to electrically disconnect the electric motor 42 from the drive circuit 31 and thereby interrupt outputting the AC output power. To restart outputting the AC output power, the control circuit 35 sets the first protective device 33 to the ON state to connect the electric motor 42 to the drive circuit 31.

In the present embodiment, the control circuit 35 controls the drive circuit 31 to decrease the setting value of the amplitude of the AC output power. In the present embodiment, since the drive circuit 31 can provide five voltage levels of E, E/2, 0, -E/2, and -E, the setting value of the amplitude of the AC output power is changed from E to E/2. In this case, the rotational speed of the electric motor 42 decreases compared to when the setting value of the amplitude of the AC output power is E.

If inputting the input power is interrupted, outputting the AC output power is interrupted as a result. In the present embodiment, the control circuit 35 sets the second protective device 34 to the OFF state to electrically disconnect the power supply 10 from the drive circuit 31 and thereby interrupt outputting the AC output power. To restart inputting the input power, the control circuit 35 sets the second protective device 34 to the ON state to connect the power supply 10 to the drive circuit 31.

The control circuit 35 interrupts or limits the operation of the drive circuit 31 in a different way according to the number of times the detection voltage has fallen below the second voltage. In particular, the control circuit 35 performs a process with a higher degree of suppression of the disproportionation reaction as the number of times the detection voltage falls below the second voltage becomes greater. This allows the control device 3 to suppress the disproportionation reaction even if relatively minor discharge phenomena occur continuously in a short time. For example, this prevents induction of the disproportionation reaction by exceeding a predetermined energy due to continuous low-energy abnormal states (discharges), thereby improving the safety of use of the working medium 20.

The control circuit 35 also interrupts or limits the operation of the drive circuit 31 in a different way according to a time difference between a first time when the detection voltage first falls below the second voltage and a second time when the detection voltage falls below the second voltage next time. In particular, the control circuit 35 performs a process with a higher degree of suppression of the disproportionation reaction as the time difference becomes shorter. Thus, the control device 3 can suppress the disproportionation reaction even if relatively minor discharge phenomena occur continuously in a short time. For example, this prevents induction of a disproportionation reaction by exceeding a certain energy due to continuously occurring low-energy abnormal states (discharges), improving safety in the use of the working medium 20.

The process for suppressing the disproportionation reaction may include, for example, a first process to a third process. The first process is a process of interrupting outputting the AC output power and after a lapse of a waiting period, restarting outputting the AC output power. The second process is a process of interrupting outputting the AC output power and after a lapse of a waiting period, restarting the operation with a reduced setting value of the amplitude of the AC output power. The third process is a process of interrupting outputting the AC output power and interrupting inputting the input power. Among the first to third processes, the degree of suppression of the disproportionation reaction is higher in the order of the third, the second, and the first processes. Even in the first or second processes, the longer the waiting period, the higher the degree of the disproportionation suppression.

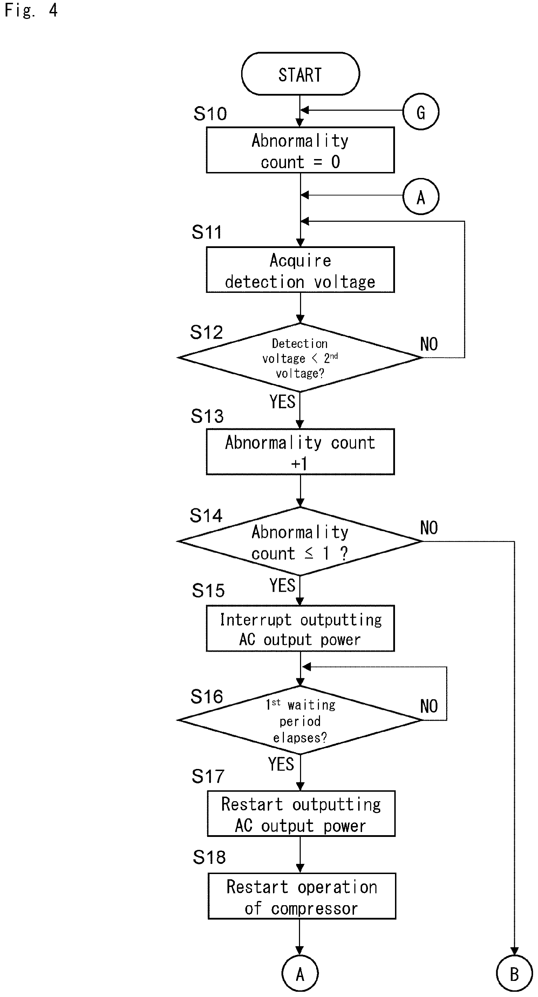

Next, an example of the operation of the control circuit 35 of the control device 3 will be briefly explained with reference to Figs. 4 to 9. Each of Figs. 4 to 9 represents a part of a flowchart showing the operation of the control circuit 35 of the control device 3, and a complete flowchart is obtained by combining Figs. 4 to 9.

Referring to Fig. 4, the control circuit 35 outputs the AC output power to the electric motor 42 based on the input power from the power supply 10 by use of the drive circuit 31, thereby driving the compressor 4. The control circuit 35 sets an abnormality count to zero (S10). The abnormality count indicates the number of times the detection voltage has fallen below the second voltage. A higher abnormality count serves as an indicator of a higher likelihood of occurrence of the disproportionation reaction.

The control circuit 35 acquires the detection voltage from the state detection circuit 32 (S11). The control circuit 35 determines whether the detection voltage falls below the second voltage (S12).

If the detection voltage does not fall below the second voltage (S12: NO), the process returns to step S10. Through steps S11 and S12, the control circuit 35 determines, at a predetermined interval, whether the detection voltage falls below the second voltage. It is preferable that this predetermined interval be shorter than the period corresponding to the reference frequency (e.g., 1000 to 5000 Hz) of the inverter circuit 312.

If, in step S12, the detection voltage falls below the second voltage (S12: YES), the control circuit 35 increments the abnormality count by one (S13) and determines whether the abnormality count is one or less (S14).

If, in step S14, the abnormality count is one or less (S14: YES), the control circuit 35 sets the first protective device 33 to the OFF state to interrupt outputting the AC output power (S15). The control circuit 35 then determines whether first waiting period has elapsed after the interruption of outputting the AC output power (S16). The first waiting period is, for example, 1 second. When the first waiting period has elapsed (S16: YES), the control circuit 35 sets the first protective device 33 to the ON state to restart outputting the AC output power (S17), thereby restarting the operation of the compressor 4 (S18). Thereafter, the process returns to step S11.

In this way, the control circuit 35 interrupts outputting the AC output power when the detection voltage falls below the second voltage, and restarts outputting the AC output power after the first waiting period has elapsed.

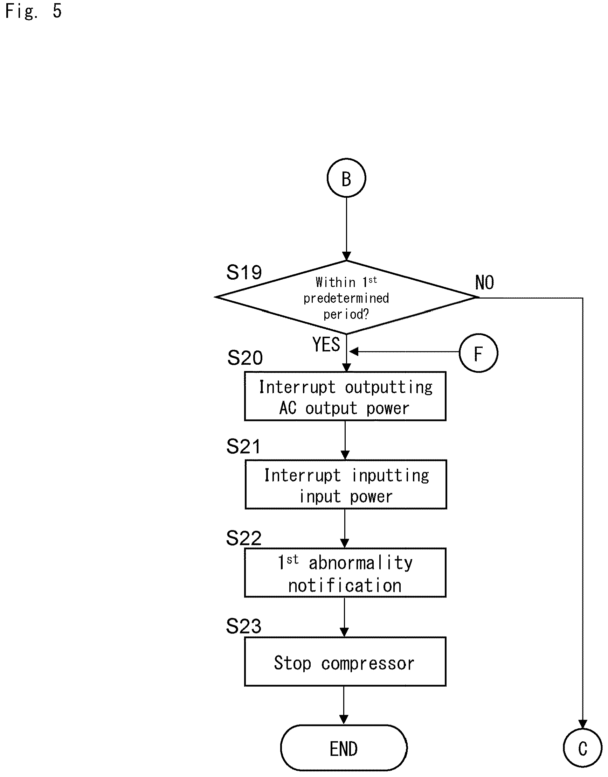

If, in step S14, the abnormality count is greater than one (S14: NO), referring to Fig. 5, the control circuit 35 determines whether the time difference between the first time when the detected voltage first falls below the second voltage and the second time when the detection voltage falls below the second voltage next time is within a first predetermined period (step S19). A shorter time difference serves as an indicator of a higher likelihood of occurrence of the disproportionation reaction. The first predetermined period is, for example, about 100 times the period corresponding to the reference frequency of the inverter circuit 312, i.e., about 20 to 100 ms.

If in step S19 the time difference is within the first predetermined period (step S19: YES), the control circuit 35 sets the first protective device 33 to the OFF state to interrupt outputting the AC output power (S20). The control circuit 35 sets the second protective device 34 to the OFF state to interrupt inputting the input power (S21). The control circuit 35 outputs a first abnormality notification (S22). The first abnormality notification indicates that an abnormality with a very high likelihood of causing the disproportionation reaction in the refrigeration cycle device 1 has occurred. The first abnormality notification is output to, for example, a control circuit of the indoor unit 1b and a remote controller, etc. After this, the control circuit 35 interrupts the operation of the compressor 4 (S23).

In this way, if the detection voltage falls below the second voltage before a predetermined period (the first predetermined period) elapses after restart (S17) of outputting the AC output power after a lapse of the first waiting period (S19: YES), the control circuit 35 interrupts outputting the AC output power (S20) and interrupts inputting the input power (S21).

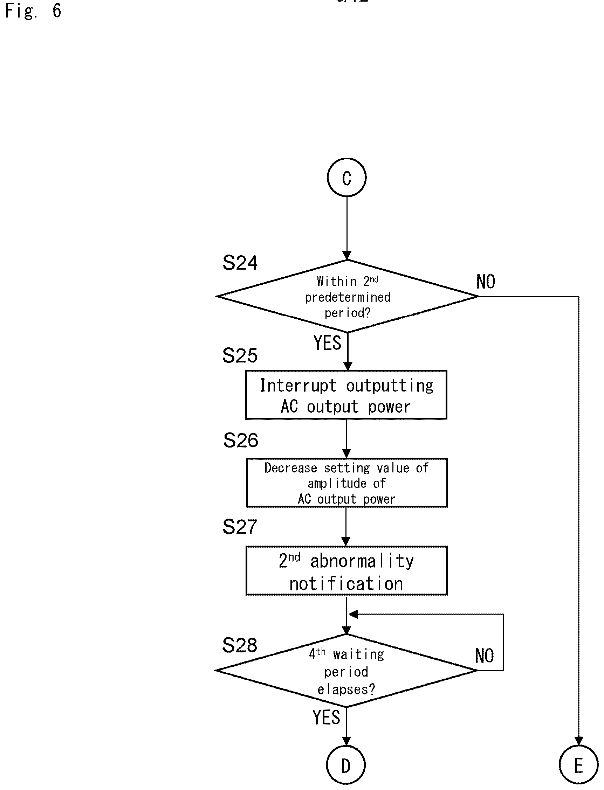

If in step S19 the time difference is not within the first predetermined period (S19: NO), referring to Fig. 6, the control circuit 35 determines whether the time difference is within a second predetermined period that is longer than the first predetermined period (step S24). The second predetermined period is, for example, about 1,000 times the period corresponding to the reference frequency of the inverter circuit 312, i.e., about 200 ms to 1 s.

If in step S24 the time difference is within the second predetermined period (S24: YES), the control circuit 35 sets the first protective device 33 to the OFF state to interrupt outputting the AC output power (S25). The control circuit 35 changes the switching control of the semiconductor switching elements of the drive circuit 31 so that the setting value of the amplitude of the AC output power is reduced from E to E/2 (S26). The control circuit 35 outputs a second abnormality notification (S27). The second abnormality notification indicates that an abnormality with a high likelihood of causing the disproportionation reaction has occurred in the refrigeration cycle device 1. The second abnormality notification is output, for example, to the control circuit of the indoor unit 1b and to a remote controller.

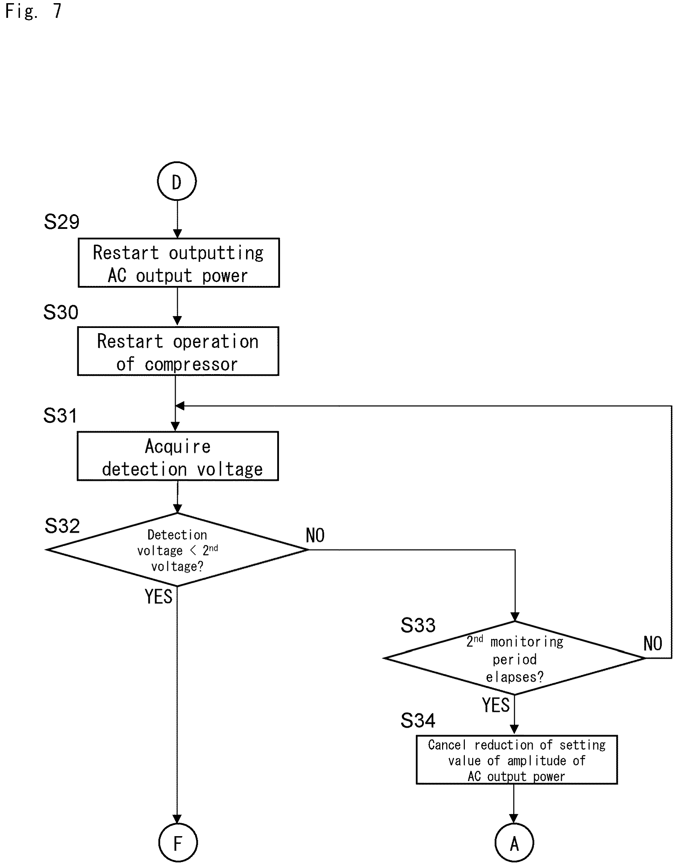

The control circuit 35 determines whether fourth waiting period has elapsed after the interruption of outputting the AC output power (S28). The fourth waiting period is longer than the first waiting period and is, for example, 60 seconds. When the fourth waiting period has elapsed (S28: YES), as shown in Fig. 7, the control circuit 35 sets the first protective device 33 to the ON state to restart outputting the AC output power (S29), thereby restarting the operation of the compressor 4 (S30). In this case, the setting value of the amplitude of the AC output power remains reduced from E to E/2.

Thus, if the detection voltage falls below the second voltage before a prescribed period (the second predetermined period) elapses after restart (S17) of outputting the AC output power after a lapse of the first waiting period, the control circuit 35 interrupts outputting the AC output power (S25) and reduces the setting value of the amplitude of the AC output power (S26). If the fourth waiting period, which is longer than the first waiting period, elapses after the interruption of outputting the AC output power, the control circuit 35 restarts outputting the AC output power while keeping the setting value of the amplitude reduced (S29).

Thereafter, the control circuit 35 acquires the detection voltage from the state detection circuit 32 (S31) and determines whether the detection voltage falls below the second voltage (S32).

If in step S32 the detection voltage falls below the second voltage (S32: YES), the process proceeds to step S20 in Fig. 5.

If in step S32 the detection voltage does not fall below the second voltage (S32: NO), the control circuit 35 determines whether a second monitoring period has elapsed since restart of the operation of the compressor 4 (S33).

If in step S33 the second monitoring period has elapsed since restart of the operation of the compressor 4 (S33: YES), the control circuit 35 cancels the reduction of the setting value of the amplitude of the AC output power and returns the setting value of the amplitude to E (S34), and the process proceeds to step S11 in Fig. 4.

If in step S33 the second monitoring period has not elapsed since restart of the operation of the compressor 4 (S33: NO), the process returns to step S31.

In steps S31 to S33, if the detection voltage falls below the second voltage before the second monitoring period has elapsed since restart of the operation of the compressor 4, the process proceeds to step S20 in Fig. 5. If the detection voltage does not fall below the second voltage before the end of the second monitoring period after the restart of the operation of the compressor 4, the process proceeds to step S34.

In this way, if the detection voltage does not fall below the second voltage during the second monitoring period after the restart (S29) of the outputting the AC output power after a lapse of the fourth waiting period (S33: YES), the control circuit 35 cancels the reduction of the setting value of the amplitude of the AC output power (S34). If the detection voltage falls below the second voltage before the second monitoring period elapses after the restart (S29) of outputting the AC output power after a lapse of the fourth waiting period (S32: YES), the control circuit 35 interrupts outputting the AC output power (S20) and interrupts inputting the input power (S21).

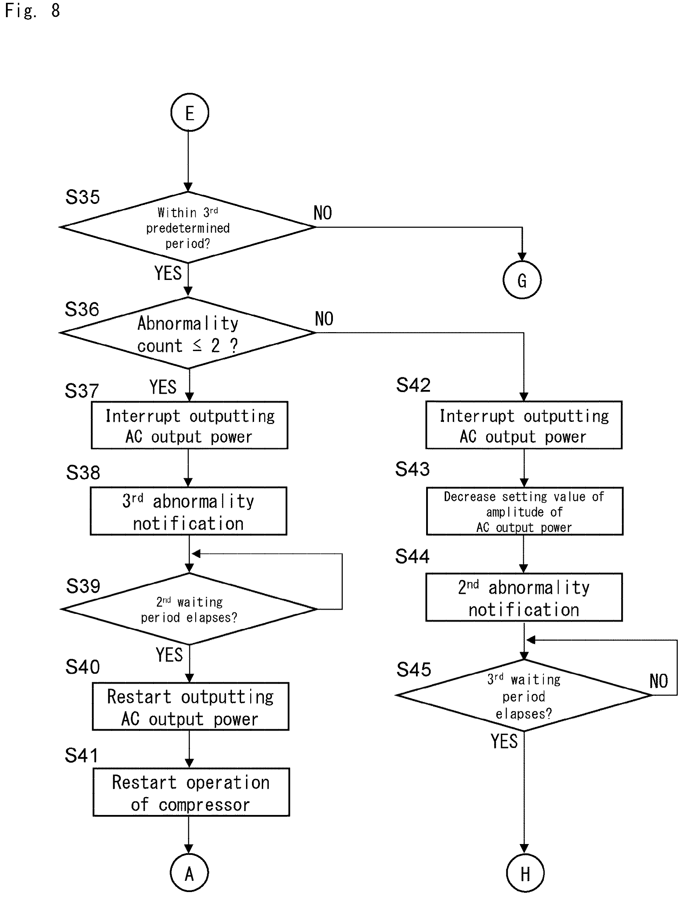

Returning to Fig. 6, if in step S24 the time difference is not within the second predetermined period (S24: NO), referring to Fig. 8, the control circuit 35 determines whether the time difference is within a third predetermined period, which is longer than the second predetermined period (step S35). The third predetermined period is, for example, about 10,000 times the period corresponding to the reference frequency of the inverter circuit 312, that is, about 2 to 10 s.

If in step S35 the time difference is not within the third predetermined period (S35: NO), the process returns to step S10, and the control circuit 35 sets the abnormality count to zero (see Fig. 4). That is, if sufficient time has passed since the last abnormality detection, it is considered that the possibility of occurrence of a discharge phenomenon is low, and the abnormality count is reset to zero.

If in step S35 the time difference is within the third predetermined period (S35: YES), the control circuit 35 determines whether the abnormality count is two or less (S36).

If in step S36 the abnormality count is two or less (S36: YES), the control circuit 35 sets the first protective device 33 to the OFF state to interrupt outputting the AC output power (S37). The control circuit 35 outputs a third abnormality notification (S38). The third abnormality notification indicates that an abnormality that may cause a disproportionation reaction has occurred in the refrigeration cycle device 1. The third abnormality notification is output, for example, to the control circuit of the indoor unit 1b and to a remote controller. The control circuit 35 determines whether a second waiting period has elapsed after the interruption of outputting the AC output power (S39). The second waiting period is longer than the first waiting period and is, for example, 10 seconds. When the second waiting period has elapsed (S39: YES), the control circuit 35 sets the first protective device 33 to the ON state to restart outputting the AC output power (S40), thereby restarting the operation of the compressor 4 (S41). Thereafter, the process returns to step S11.

In this way, if the detection voltage falls below the second voltage before a predetermined period (the third predetermined period) elapses after the restart of outputting the AC output power after a lapse of the first waiting period (S17), the control circuit 35 interrupts outputting the AC output power. If the second waiting period, which is longer than the first waiting period, has elapsed after the interruption of outputting the AC output power, the control circuit 35 restarts outputting the AC output power (S40).

In step S36, if the abnormality count is not two or less (S36: NO), that is, if the abnormality count is three or more, the control circuit 35 sets the first protective device 33 to the OFF state to interrupt outputting the AC output power (S42). The control circuit 35 changes the switching control of the semiconductor switching elements of the drive circuit 31 so that the setting value of the amplitude of the AC output power is reduced from E to E/2 (S43). The control circuit 35 outputs the second abnormality notification (S44).

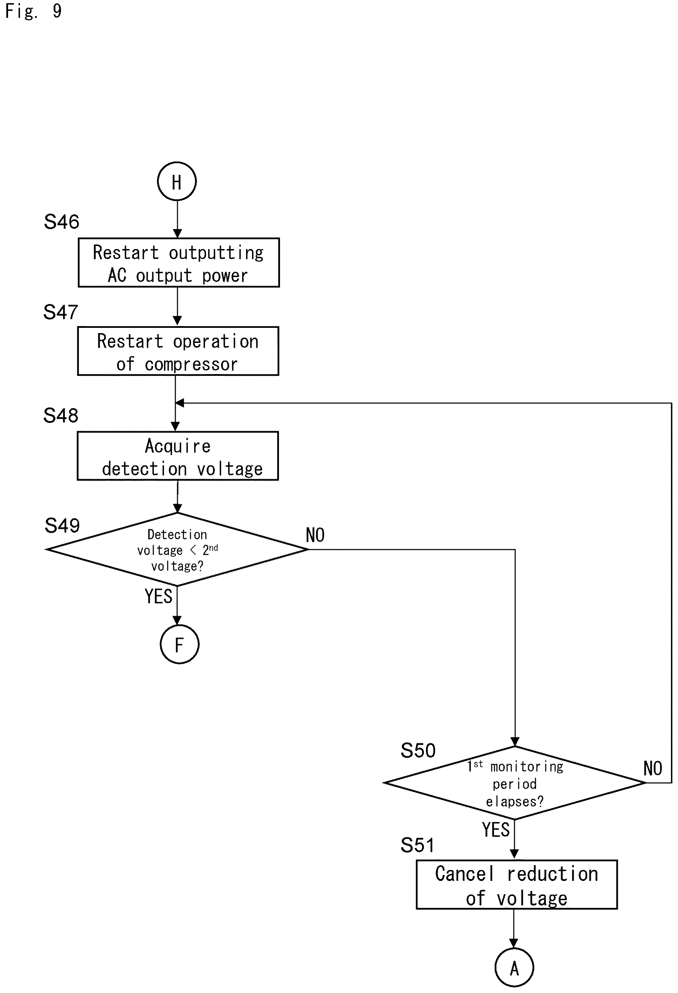

The control circuit 35 determines whether third waiting period has elapsed after the interruption of outputting the AC output power (S45). The third waiting period is longer than the second waiting period and is, for example, 60 seconds. When the third waiting period has elapsed (S45: YES), as shown in Fig. 9, the control circuit 35 sets the first protective device 33 to the ON state to restart outputting the AC output power (S46), thereby restarting the operation of the compressor 4 (S47). In this case, the setting value of the amplitude of the AC output power remains reduced from E to E/2.

Thus, if the detection voltage falls below the second voltage before a predetermined period (the third predetermined period) elapses after the restart of outputting the AC output power after a lapse of the second waiting period (S40), the control circuit 35 interrupts outputting the AC output power (S42) and reduces the setting value of the amplitude of the AC output power (S43). If the third waiting period, which is longer than the second waiting period, has elapsed after the interruption of outputting the AC output power, the control circuit 35 restarts outputting the AC output power while keeping the setting value of the amplitude reduced (S47).

Thereafter, the control circuit 35 acquires the detection voltage from the state detection circuit 32 (S48) and determines whether the detection voltage falls below the second voltage (S49).

If in step S49 the detection voltage falls below the second voltage (S49: YES), the process proceeds to step S20 in Fig. 5.

If in step S49 the detection voltage does not fall below the second voltage (S49: NO), the control circuit 35 determines whether a first monitoring period has elapsed since restart of the operation of the compressor 4 (S50). The first monitoring period may be the same as or different from the second monitoring period in step S33.

If in step S50 the first monitoring period has elapsed since restart of the operation of the compressor 4 (S50: YES), the control circuit 35 cancels the reduction of the setting value of the amplitude of the AC output power and returns the setting value of the amplitude to E (S51), and then the process proceeds to step S11 in Fig. 4.

If in step S50 the first monitoring period has not elapsed since restart of the operation of the compressor 4 (S50: NO), the process returns to step S48.

In steps S48 to S50, if the detection voltage falls below the second voltage before the first monitoring period has elapsed since restart of the operation of the compressor 4, the process proceeds to step S20 in Fig. 5, and if the detection voltage does not fall below the second voltage before the end of the first monitoring period, the process proceeds to step S51.

In this way, if the detection voltage does not fall below the second voltage during the first monitoring period after the restart (S47) of the AC output power after a lapse of the third waiting period (S50: YES), the control circuit 35 cancels the reduction of the setting value of the amplitude of the AC output power (S51). If the detection voltage falls below the second voltage before the first monitoring period elapses after the restart (S47) of outputting the AC output power after a lapse of the third waiting period (S49: YES), the control circuit 35 interrupts outputting the AC output power (S20) and interrupts inputting the input power (S21).

In the aforementioned control device 3, the plurality of semiconductor switching elements U1 to U4, V1 to V4, W1 to W4 of the inverter circuit 312 include one or more protective semiconductor switching elements (the semiconductor switching elements U1, U4, V1, V4, W1, W4) with a maximum allowable current smaller than 135 A. Therefore, when an instantaneous abnormal current occurs, the protective semiconductor switching device is destroyed by the abnormal current, and current is cut off at the protective semiconductor switching device. As a result, the outputting the AC output power from the drive circuit 31 to the motor 42 is limited or interrupted. Furthermore, the control circuit 35 interrupts or limits the operation of the drive circuit 31 when the abnormal current occurs, thereby limiting or interrupting outputting the AC output power. Here, when an abnormal current occurs, the protective semiconductor switching device is destroyed before the control circuit 35 interrupts or limits the operation of the drive circuit 31. Therefore, the time from the occurrence of the abnormal current to the limitation or interruption of outputting the AC output power can be shortened, which improves the suppression of disproportionation reactions of the working medium 20. In particular, by destroying the protective semiconductor switching device, it becomes possible to suppress the disproportionation reaction of the working medium 20 with zero delay. Furthermore, since the control circuit 35 interrupts or limits the operation of the drive circuit 31, it is possible to suppress the continuous supply of energy from the drive circuit 31 to the compressor 4 under abnormal conditions, thereby enhancing safety. Even if the protective semiconductor switching device is not destroyed, it is still possible to suppress the disproportionation reaction of the working medium 20 by the control circuit 35.

### [1.2 ADVANTAGEOUS EFFECTS]

The inverter circuit 312 is included in the drive circuit 31 for driving the compressor 4 of the refrigeration cycle circuit 2 allowing circulation of the working medium 20. The inverter circuit 312 includes the plurality of semiconductor switching elements U1 to U4, V1 to V4, W1 to W4 and is configured to output the AC output power to the compressor 4 based on the DC output power. The plurality of semiconductor switching elements U1 to U4, V1 to V4, W1 to W4 include one or more protective semiconductor switching elements (the semiconductor switching elements U1, U4, V1, V4, W1, W4) with the maximum allowable current smaller than 135 A. This configuration can shorten the time from the occurrence of abnormal current to the limitation or interruption of outputting AC output power, thereby improving the suppression of disproportionation reactions.

In the inverter circuit 312, the voltage of the DC output power is defined by the first and second output points P1 and P2. The plurality of semiconductor switching elements U1 to U4, V1 to V4, W1 to W4 include, for each phase of the AC output power, the first semiconductor switching element group connected between the first output point P1 and the compressor 4, and the second semiconductor switching element group connected between the second output point P2 and the compressor 4. The first semiconductor switching element group includes at least one of the one or more protective semiconductor switching elements and the second semiconductor switching element group includes at least one of remaining one or more protective semiconductor switching elements. This configuration can shorten the time from the occurrence of abnormal current to the limitation or interruption of outputting AC output power, thereby improving the suppression of disproportionation reactions.

In the inverter circuit 312, each of the first semiconductor switching element group and the second semiconductor switching element group constitutes a series circuit of semiconductor switching elements. This configuration can shorten the time from the occurrence of abnormal current to the limitation or interruption of outputting AC output power, thereby improving the suppression of disproportionation reactions.

In the inverter circuit 312, the one or more protective semiconductor switching elements (the semiconductor switching elements U1, U4, V1, V4, W1, W4) include an IGBT. This configuration can shorten the time from the occurrence of abnormal current to the limitation or interruption of outputting AC output power, thereby improving the suppression of disproportionation reactions.

In the inverter circuit 312, the one or more protective semiconductor switching elements (the semiconductor switching elements U1, U4, V1, V4, W1, W4) may include a MOSFET. This configuration can shorten the time from the occurrence of abnormal current to the limitation or interruption of outputting AC output power, thereby improving the suppression of disproportionation reactions.

In the inverter circuit 312, the one or more protective semiconductor switching elements (the semiconductor switching elements U1, U4, V1, V4, W1, W4) include a bipolar transistor. This configuration can shorten the time from the occurrence of abnormal current to the limitation or interruption of outputting AC output power, thereby improving the suppression of disproportionation reactions.

The aforementioned drive circuit 31 includes: the inverter circuit 312; and the converter circuit 311 configured to output the DC output power to the inverter circuit 312 based on the input power from the power supply 10. This configuration can shorten the time from the occurrence of abnormal current to the limitation or interruption of outputting AC output power, thereby improving the suppression of disproportionation reactions.

The aforementioned control device 3 includes: the drive circuit 31; and the control circuit 35 configured to control the drive circuit 31. The control circuit 35 is configured to interrupt or limit the operation of the drive circuit 31 in response to detection of an abnormality in at least one of the compressor 4 or the drive circuit 31. This configuration suppresses the continuous supply of energy from the drive circuit 31 to the compressor 4 under abnormal conditions, thereby enhancing safety. Even if the protective semiconductor switching device is not destroyed, it is still possible to suppress the disproportionation reaction of the working medium 20.

The control device 3 further includes the state detection circuit 32 configured to detect a state of at least one of the compressor 4 or the drive circuit 31. The converter 311 circuit is configured to output the DC output power so that the voltage of the DC output power becomes the first voltage. The state detection circuit 32 is configured to detect the DC output power to output the detection voltage indicating the voltage of the DC output power. The control circuit 35 is configured to interrupt or limit the operation of the drive circuit 31 when the detection voltage falls below the second voltage smaller than the first voltage. This configuration enables earlier detection of signs of disproportionation reaction in the working medium 20 and improves the suppression of the disproportionation reaction.

In the control device 3, the second voltage is between 0.3 times and 0.8 times the rated voltage, inclusive. This configuration enables earlier detection of the sign of the disproportionation reaction of the working medium 20, and enables improvement of suppression of the disproportionation reaction.

The aforementioned refrigeration cycle device 1 includes the control device 3 and the refrigeration cycle circuit 2. This configuration enables improvement of suppression of the disproportionation reaction.

In the refrigeration cycle device 1, the working medium contains ethylene-based fluoroolefin. This configuration makes it possible to enhance the suppression of the disproportionation reaction of the working medium 20.

In the refrigeration cycle device 1, the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene. This configuration makes it possible to enhance the suppression of the disproportionation reaction of the working medium 20.

In the refrigeration cycle device 1, the working medium 20 contains difluoromethane. This configuration makes it possible to enhance the suppression of the disproportionation reaction of the working medium 20.

In the refrigeration cycle device 1, the working medium 20 further contains a saturated hydrocarbon. This configuration makes it possible to enhance the suppression of the disproportionation reaction of the working medium 20.

In the refrigeration cycle device 1, the working medium 20 contains a haloalkane with 1 or 2 carbon atoms as a disproportionation inhibitor for suppressing a disproportionation reaction of the ethylene-based fluoroolefin. This configuration makes it possible to enhance the suppression of the disproportionation reaction of the working medium 20.

In the refrigeration cycle device 1, the saturated hydrocarbon contains n-propane. This configuration makes it possible to enhance the suppression of the disproportionation reaction of the working medium 20.

The aforementioned control device 3 seems to perform the following control method. The control method is performed by the control device 3 for controlling the compressor 4 of the refrigeration cycle circuit 2 allowing circulation of the working medium 20. The drive circuit 31 includes the converter circuit 311 configured to output the DC output power based on the input power from the power supply 10, and the inverter circuit 312 including the plurality of semiconductor switching elements U1 to U4, V1 to V4, W1 to W4 and configured to output the AC output power to the compressor 4 based on the DC output power. The plurality of semiconductor switching elements U1 to U4, V1 to V4, W1 to W4 include one or more protective semiconductor switching elements U1, U4, V1, V4, W1, W4 with a maximum allowable current smaller than 135 A. The control method includes interrupting or limiting the operation of the drive circuit 31 in response to detection of the abnormality in at least one of the compressor 4 or the drive circuit 31. This configuration can shorten the time from the occurrence of abnormal current to the limitation or interruption of outputting AC output power, thereby improving the suppression of disproportionation reactions. Furthermore, this configuration suppresses the continuous supply of energy from the drive circuit 31 to the compressor 4 under abnormal conditions, thereby enhancing safety. Even if the protective semiconductor switching device is not destroyed, it is still possible to suppress the disproportionation reaction of the working medium 20.

The control method performed by the control device 3 can be implemented by a computer system executing a program. This program is executed by a computer system included in the control device 3 for controlling the compressor 4 of the refrigeration cycle circuit 2 allowing circulation of the working medium 20. The drive circuit 31 includes the converter circuit 311 configured to output the DC output power based on the input power from the power supply 10, and the inverter circuit 312 including the plurality of semiconductor switching elements U1 to U4, V1 to V4, W1 to W4 and configured to output the AC output power to the compressor 4 based on the DC output power. The plurality of semiconductor switching elements U1 to U4, V1 to V4, W1 to W4 include one or more protective semiconductor switching elements U1, U4, V1, V4, W1, W4 with a maximum allowable current smaller than 135 A. The program enables the computer system to interrupt or limit the operation of the drive circuit 31 in response to detection of the abnormality in at least one of the compressor 4 or the drive circuit 31. This configuration can shorten the time from the occurrence of abnormal current to the limitation or interruption of outputting AC output power, thereby improving the suppression of disproportionation reactions. Furthermore, this configuration suppresses the continuous supply of energy from the drive circuit 31 to the compressor 4 under abnormal conditions, thereby enhancing safety. Even if the protective semiconductor switching device is not destroyed, it is still possible to suppress the disproportionation reaction of the working medium 20 by the control circuit 35.

### [2. VARIATIONS]

Embodiments of the present disclosure are not limited to the embodiment described above. The above embodiment may be variously modified in accordance with design and other factors, provided that the objects of the present disclosure can be achieved. Hereinafter, variations of the above embodiment will be enumerated. The variations described below may be applied in appropriate combinations.

### [2.1 VARIATION 1]

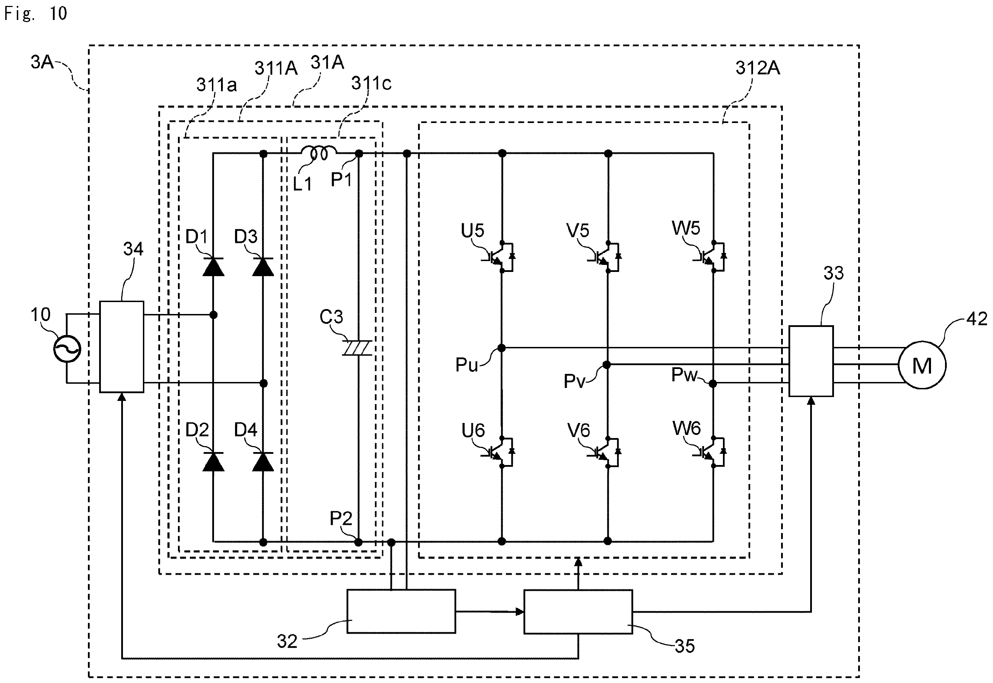

Fig. 10 is a schematic view of the compressor 4 and a control device 3A of a refrigeration cycle device according to variation 1 In Fig. 10, for the sake of simplification of the illustration, only the electric motor 42 is shown for the compressor 4, and the first protective circuit 33 and the second protective circuit 34 are simplified.

The control device 3A includes a drive circuit 31A, the state detection circuit 32, the first protective circuit 33, the second protective circuit 34, and the control circuit 35.

The drive circuit 31A includes a converter circuit 311A and an inverter circuit 312A.

The converter circuit 311A includes the rectification circuit 311a and a smoothing circuit 311c.

The smoothing circuit 311c smooths a voltage between the output terminals of the rectification circuit 311a to output it. By the smoothing circuit 311c, the voltage of the DC output power is set to the first voltage. The smoothing circuit 311c includes a series circuit of the inductor L1 and a smoothing capacitor C3. In the smoothing circuit 311c, a connecting point between the inductor L1 and the smoothing capacitor C1 corresponds to a first output point P1 outputting a voltage corresponding to the first voltage. In the smoothing circuit 311c, a connecting point between the connecting point between the diodes D2, D4 and the smoothing capacitor C3 corresponds to a second output point P2 outputting a voltage lower than the voltage at the first output point P1. The first output point P1 and the second output point P2 define the voltage of the DC output power.

The inverter circuit 312A outputs AC output power to the electric motor 42 based on the DC output power from the converter circuit 311A. The AC output power is three-phase AC power. The inverter circuit 312A includes a plurality of semiconductor switching elements U5 to U6, V5 to V6, and W5 to W6.

Each set of the semiconductor switching elements U5 to U6, V5 to V6, and W5 to W6 forms a series circuit and is connected between the first output point P1 and the second output point P2.

A connecting point between the semiconductor switching elements U5 and U6 constitutes a U-phase output terminal Pu, which is connected to a U-phase input terminal of the electric motor 42. A connecting point between the semiconductor switching elements V5 and V6 constitutes a V-phase output terminal Pv, which is connected to a V-phase input terminal of the electric motor 42. A connecting point between the semiconductor switching elements W5 and W6 constitutes a W-phase output terminal Pw, which is connected to a W-phase input terminal of the electric motor 42.

**In** the present variation, the maximum allowable current of each of the semiconductor switching elements U5, U6, V5, V6, W5, and W6 is smaller than 135 A. The semiconductor switching elements U5, U6, V5, V6, W5, and W6 all serve as protective semiconductor switching elements.

The semiconductor switching elements U5, V5, and W5 constitute first semiconductor switching element groups connected between the first output point **P1** and the electric motor 42. **In** particular, The semiconductor switching elements U5, V5, and W5 constitute U-phase, V-phase, and W-phase first semiconductor switching element groups connected between the first output point **P1** and the U-phase, V-phase, and W-phase input terminals of the electric motor 42, respectively. This means that the first semiconductor switching element may be constituted by a single semiconductor switching element.

The semiconductor switching elements U6, V6, and W6 constitute second semiconductor switching element groups connected between the second output point P2 and the electric motor 42. **In** particular, The semiconductor switching elements U6, V6, and W6 constitute U-phase, V-phase, and W-phase second semiconductor switching element groups connected between the second output point P2 and the U-phase, V-phase, and W-phase input terminals of the electric motor 42, respectively. This means that the second semiconductor switching element may be constituted by a single semiconductor switching element.

**In** the aforementioned control device 3A, the plurality of semiconductor switching elements U5, U6, V5, V6, W5, and W6 of the inverter circuit 312B include the protective semiconductor switching elements (the semiconductor switching elements U5, U6, V5, V6, W5, and W6) with the maximum allowable current smaller than 135 A. Therefore, when an instantaneous abnormal current occurs, the protective semiconductor switching device is destroyed by the abnormal current, and current is cut off at the protective semiconductor switching device. As a result, the outputting the AC output power from the drive circuit 31A to the motor 42 is limited or interrupted. Furthermore, the control circuit 35 interrupts or limits the operation of the drive circuit 31A when the abnormal current occurs, thereby limiting or interrupting outputting the AC output power. Here, when an abnormal current occurs, the protective semiconductor switching device is destroyed before the control circuit 35 interrupts or limits the operation of the drive circuit 31A. Therefore, the time from the occurrence of the abnormal current to the limitation or interruption of outputting the AC output power can be shortened, which improves the suppression of disproportionation reactions of the working medium 20. In particular, by destroying the protective semiconductor switching device, it becomes possible to suppress the disproportionation reaction of the working medium 20 with zero delay. Furthermore, since the control circuit 35 interrupts or limits the operation of the drive circuit 31A, it is possible to suppress the continuous supply of energy from the drive circuit 31A to the compressor 4 under abnormal conditions, thereby enhancing safety. Even if the protective semiconductor switching device is not destroyed, it is still possible to suppress the disproportionation reaction of the working medium 20 by the control circuit 35.

The inverter circuit 312A is included in the drive circuit 31A for driving the compressor 4 of the refrigeration cycle circuit 2 allowing circulation of the working medium 20. The inverter circuit 312A includes the plurality of semiconductor switching elements U5, U6, V5, V6, W5, and W6 and is configured to output the AC output power to the compressor 4 based on the DC output power. The plurality of semiconductor switching elements U5, U6, V5, V6, W5, and W6 include one or more protective semiconductor switching elements (the semiconductor switching elements U5, U6, V5, V6, W5, and W6) with the maximum allowable current smaller than 135 A. This configuration can shorten the time from the occurrence of abnormal current to the limitation or interruption of outputting AC output power, thereby improving the suppression of disproportionation reactions.

**In** the inverter circuit 312A, the voltage of the DC output power is defined by the first and second output points **P1** and P2. The plurality of semiconductor switching elements U5, U6, V5, V6, W5, and W6 include, for each phase of the AC output power, the first semiconductor switching element group connected between the first output point **P1** and the electric motor 42, and the second semiconductor switching element group connected between the second output point P2 and the electric motor 42. The first semiconductor switching element group includes at least one of the one or more protective semiconductor switching elements (the semiconductor switching elements U5, V5, and W5) and the second semiconductor switching element group includes at least one of remaining one or more protective semiconductor switching elements (the semiconductor switching elements U6, V6, and W6). This configuration can shorten the time from the occurrence of abnormal current to the limitation or interruption of outputting AC output power, thereby improving the suppression of disproportionation reactions.

### [2.2 VARIATION 2]

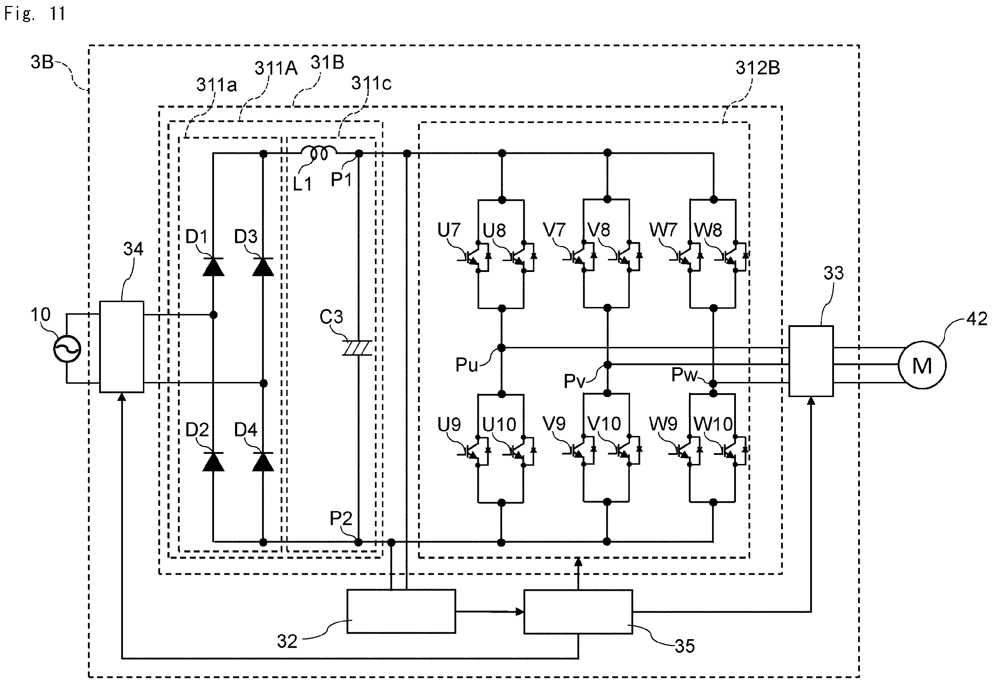

Fig. 11 is a schematic view of the compressor 4 and a control device 3B of a refrigeration cycle device according to variation 2 In Fig. 11, for the sake of simplification of the illustration, only the electric motor 42 is shown for the compressor 4, and the first protective circuit 33 and the second protective circuit 34 are simplified.

The control device 3B includes a drive circuit 31B, the state detection circuit 32, the first protective circuit 33, the second protective circuit 34, and the control circuit 35.

The drive circuit 31B includes the converter circuit 311A and an inverter circuit 312B.

The inverter circuit 312B outputs AC output power to the electric motor 42 based on the DC output power from the converter circuit 311A. The AC output power is three-phase AC power. The inverter circuit 312B includes a plurality of semiconductor switching elements U7 to U10, V7 to V10, and W7 to W10.

Each set of the semiconductor switching elements U7, U8 and U9, U10 constitutes a parallel circuit. The parallel circuit of the semiconductor switching elements U7 and U8 and the parallel circuit of the semiconductor switching elements U9 and U10 constitute a series circuit, which is connected between the first output point P1 and the second output point P2. The semiconductor switching elements U7 and U8 are turned on or off simultaneously, and the parallel circuit of the semiconductor switching elements U7 and U8 is used as a single semiconductor switching element. The semiconductor switching elements U9 and U10 are turned on or off simultaneously, and the parallel circuit of the semiconductor switching elements U9 and U10 is used as a single semiconductor switching element.

Each set of the semiconductor switching elements V7, V8 and V9, V10 constitutes a parallel circuit. The parallel circuit of the semiconductor switching elements V7 and V8 and the parallel circuit of the semiconductor switching elements V9 and V10 constitute a series circuit, which is connected between the first output point P1 and the second output point P2. The semiconductor switching elements V7 and V8 are turned on or off simultaneously, and the parallel circuit of the semiconductor switching elements V7 and V8 is used as a single semiconductor switching element. The semiconductor switching elements V9 and V10 are turned on or off simultaneously, and the parallel circuit of the semiconductor switching elements V9 and V10 is used as a single semiconductor switching element.

Each set of the semiconductor switching elements W7, W8 and W9, W10 constitutes a parallel circuit. The parallel circuit of the semiconductor switching elements W7 and W8 and the parallel circuit of the semiconductor switching elements W9 and W10 constitute a series circuit, which is connected between the first output point P1 and the second output point P2. The semiconductor switching elements W7 and W8 are turned on or off simultaneously, and the parallel circuit of the semiconductor switching elements W7 and W8 is used as a single semiconductor switching element. The semiconductor switching elements W9 and W10 are turned on or off simultaneously, and the parallel circuit of the semiconductor switching elements W9 and W10 is used as a single semiconductor switching element.

A connecting point between the parallel circuit of the semiconductor switching elements U7 and U8 and the parallel circuit of the semiconductor switching elements U9 and U10 constitutes the U-phase output terminal Pu, which is connected to the U-phase input terminal of the electric motor 42. A connecting point between the parallel circuit of the semiconductor switching elements V7 and V8 and the parallel circuit of the semiconductor switching elements V9 and V10 constitutes the V-phase output terminal Pv, which is connected to the V-phase input terminal of the electric motor 42. A connecting point between the parallel circuit of the semiconductor switching elements W7 and W8 and the parallel circuit of the semiconductor switching elements W9 and W10 constitutes the W-phase output terminal Pw, which is connected to the W-phase input terminal of the electric motor 42.

In the present variation, the maximum allowable current of each of the semiconductor switching elements U7 to U10, V7 to V10, and W7 to W10 is smaller than 135 A. The semiconductor switching elements U7 to U10, V7 to V10, and W7 to W10 all serve as protective semiconductor switching elements.

The semiconductor switching elements U7, U8, V7, V8, W7, and W8 constitute first semiconductor switching element groups connected between the first output point P1 and the electric motor 42. The semiconductor switching elements U9, U10, V9, V10, W9, and W10 constitute second semiconductor switching element groups connected between the second output point P2 and the electric motor 42.

The semiconductor switching elements U7 and U8 constitutes a U-phase first semiconductor switching element group connected between the first output point P1 and the U-phase input terminal of the electric motor 42. The U-phase first semiconductor switching element group forms a parallel circuit of the semiconductor switching elements U7 and U8 and includes the semiconductor switching elements U7 and U8 serving as the protective semiconductor switching elements.

The semiconductor switching elements U9 and U10 constitutes a U-phase second semiconductor switching element group connected between the second output point P2 and the U-phase input terminal of the electric motor 42. The U-phase second semiconductor switching element group forms a parallel circuit of the semiconductor switching elements U9 and U10 and includes the semiconductor switching elements U9 and U10 serving as the protective semiconductor switching elements.

The semiconductor switching elements V7 and V8 constitutes a V-phase first semiconductor switching element group connected between the first output point P1 and the V-phase input terminal of the electric motor 42. The V-phase first semiconductor switching element group forms a parallel circuit of the semiconductor switching elements V7 and V8 and includes the semiconductor switching elements V7 and V8 serving as the protective semiconductor switching elements.

The semiconductor switching elements V9 and V10 constitutes a V-phase second semiconductor switching element group connected between the second output point P2 and the V-phase input terminal of the electric motor 42. The V-phase second semiconductor switching element group forms a parallel circuit of the semiconductor switching elements V9 and V10 and includes the semiconductor switching elements V9 and V10 serving as the protective semiconductor switching elements.

The semiconductor switching elements W7 and W8 constitutes a W-phase first semiconductor switching element group connected between the first output point P1 and the W-phase input terminal of the electric motor 42. The W-phase first semiconductor switching element group forms a parallel circuit of the semiconductor switching elements W7 and W8 and includes the semiconductor switching elements W7 and W8 serving as the protective semiconductor switching elements.

The semiconductor switching elements W9 and W10 constitutes a W-phase second semiconductor switching element group connected between the second output point P2 and the W-phase input terminal of the electric motor 42. The W-phase second semiconductor switching element group forms a parallel circuit of the semiconductor switching elements W9 and W10 and includes the semiconductor switching elements W9 and W10 serving as the protective semiconductor switching elements.

In the inverter circuit 312B, the parallel circuit of the semiconductor switching elements W7 and W8 is used as a single semiconductor switching element. The maximum allowable currents of the semiconductor switching elements W7 and W8 are set to allow the parallel circuit of the semiconductor switching elements W7 and W8 to have its maximum allowable current smaller than 135 A. The maximum allowable currents of the semiconductor switching elements U7 and U8 may be set according to the ratio of internal resistances of the semiconductor switching elements U7 and U8. This also applies to the parallel circuit of the semiconductor switching elements U9 and U10, the parallel circuits of the semiconductor switching elements V7 and V8, the parallel circuits of the semiconductor switching elements V9 and V10, the parallel circuits of the semiconductor switching elements W7 and W8, and the parallel circuits of the semiconductor switching elements W9 and W10.

In the aforementioned control device 3B, the plurality of semiconductor switching elements U7 to U10, V7 to V10, and W7 to W10 of the inverter circuit 312B include the protective semiconductor switching elements (the semiconductor switching elements U7 to U10, V7 to V10, and W7 to W10) with the maximum allowable current smaller than 135 A. Therefore, when an instantaneous abnormal current occurs, the protective semiconductor switching device is destroyed by the abnormal current, and current is cut off at the protective semiconductor switching device. As a result, the outputting the AC output power from the drive circuit 31B to the motor 42 is limited or interrupted. Furthermore, the control circuit 35 interrupts or limits the operation of the drive circuit 31B when the abnormal current occurs, thereby limiting or interrupting outputting the AC output power. Here, when an abnormal current occurs, the protective semiconductor switching device is destroyed before the control circuit 35 interrupts or limits the operation of the drive circuit 31B. Therefore, the time from the occurrence of the abnormal current to the limitation or interruption of outputting the AC output power can be shortened, which improves the suppression of disproportionation reactions of the working medium 20. In particular, by destroying the protective semiconductor switching device, it becomes possible to suppress the disproportionation reaction of the working medium 20 with zero delay. Furthermore, since the control circuit 35 interrupts or limits the operation of the drive circuit 31B, it is possible to suppress the continuous supply of energy from the drive circuit 31B to the compressor 4 under abnormal conditions, thereby enhancing safety. Even if the protective semiconductor switching device is not destroyed, it is still possible to suppress the disproportionation reaction of the working medium 20 by the control circuit 35.

The inverter circuit 312B is included in the drive circuit 31B for driving the compressor 4 of the refrigeration cycle circuit 2 allowing circulation of the working medium 20. The inverter circuit 312B includes the plurality of semiconductor switching elements U7 to U10, V7 to V10, and W7 to W10 and is configured to output the AC output power to the compressor 4 based on the DC output power. The plurality of semiconductor switching elements U7 to U10, V7 to V10, and W7 to W10 include one or more protective semiconductor switching elements (the semiconductor switching elements U7 to U10, V7 to V10, and W7 to W10) with the maximum allowable current smaller than 135A. This configuration can shorten the time from the occurrence of abnormal current to the limitation or interruption of outputting AC output power, thereby improving the suppression of disproportionation reactions.

In the inverter circuit 312B, the voltage of the DC output power is defined by the first and second output points P1 and P2. The plurality of semiconductor switching elements U7 to U10, V7 to V10, and W7 to W10 include, for each phase of the AC output power, the first semiconductor switching element group connected between the first output point P1 and the electric motor 42, and the second semiconductor switching element group connected between the second output point P2 and the electric motor 42. The first semiconductor switching element group includes at least one of the one or more protective semiconductor switching elements (the semiconductor switching elements U7, U8, V7, V8, W7, and W8) and the second semiconductor switching element group includes at least one of remaining one or more protective semiconductor switching elements (the semiconductor switching elements U9, U10, V9, V10, W9, and W10). This configuration can shorten the time from the occurrence of abnormal current to the limitation or interruption of outputting AC output power, thereby improving the suppression of disproportionation reactions.

In the inverter circuit 312B, each of the first semiconductor switching element group and the second semiconductor switching element group constitutes a parallel circuit of semiconductor switching elements. The parallel circuit has the maximum allowable current smaller than 135 A. This configuration can shorten the time from the occurrence of abnormal current to the limitation or interruption of outputting AC output power, thereby improving the suppression of disproportionation reactions.

### [2.3 VARIATION 3]

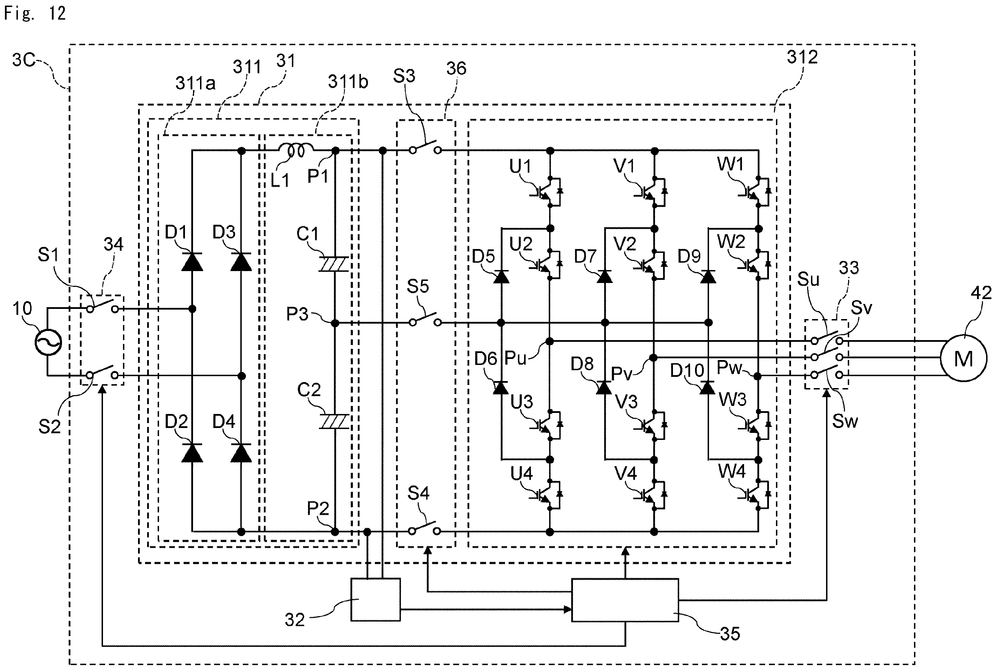

Fig. 12 is a schematic view of the compressor 4 and a control device 3C of a refrigeration cycle device according to variation 3. In Fig. 12, for the sake of simplification of the illustration, only the electric motor 42 is shown for the compressor 4.

The control device 3C includes the drive circuit 31, the state detection circuit 32, the first protective circuit 33, the second protective circuit 34, the control circuit 35, and a third protective device 36.

The third protective device 36 is provided to interrupt outputting the DC output power. The third protective device 36 includes switches S3, S4, and S5 interposed between the converter circuit 311 and the inverter circuit 312 of the drive circuit 31. The switch S3 is commonly connected between the first output point P1 and the semiconductor switching elements U1, V1, and W1. The switch S4 is commonly connected between the second output point P2 and the semiconductor switching elements U4, V4, and W4. The switch S5 is commonly connected between the third output point P3 and the connection point between the diodes D5 and D6, the connection point between the diodes D7 and D8, as well as the connection point between the diodes D9 and D10. The switches S3, S4, and S5 may be any controllable switches, such as semiconductor switches or electromagnetic relays. In the ON state where the switches S3, S4, and S5 are closed, the third protective device 36 enables outputting the DC output power from the converter circuit 311 to the inverter circuit 312. In the OFF state where the switches S3, S4, and S5 are open, the third protective device 36 interrupts outputting the DC output power from the converter circuit 311 to the inverter circuit 312.

When interrupting outputting power to the compressor 4, interrupting inputting the input power, interrupting outputting the DC output power, and interrupting outputting the AC output power, in this order, provides higher safety. Therefore, after the operation of the first protective device 33, the third protective device 36 may be operated before operating the second protective device 34. When the third protective device 36 is present, the second protective device 34 may be omitted.

### [2.4 OTHER VARIATIONS]

In one variation, in the inverter circuit 312 of the drive circuit 31, all of the plurality of semiconductor switching elements U1 to U4, V1 to V4, and W1 to W4 may be used as protective semiconductor switching elements.

In one variation, in the inverter circuit 312B of the drive circuit 31B, it is not necessary that all of the plurality of semiconductor switching elements U7 to U10, V7 to V10, and W7 to W10 be used as protective semiconductor switching elements. For example, among the semiconductor switching elements U7 and U8 constituting a parallel circuit, the maximum allowable current of one may be less than 135 A, and the maximum allowable current of the other may be 135 A or greater. Even in this case, the maximum allowable current of the parallel circuit is set to be less than 135 A. Even if one of the semiconductor switching elements U7 and U8 constituting the parallel circuit is damaged, the balance among the phases of the AC output power is disrupted, thereby causing the rotation of the electric motor 42 to stop. However, in consideration of the parallel operation of the semiconductor switching elements, it is generally desirable that, in a parallel circuit of semiconductor switching elements, semiconductor switching elements having the same performance be connected in parallel. In a case where only one of the semiconductor switching elements constituting the parallel circuit is used as a protective semiconductor switching element, it is desirable to select semiconductor switching elements such that their characteristics (e.g., switching characteristics such as switching speed, and internal resistance such as C-E on-resistance) substantially match while their maximum allowable currents differ.

In one variation, each of the semiconductor switching elements U1 to U4, V1 to V4, and W1 to W4 may be a MOSFET. In general, a MOSFET has lower durability than an IGBT. For example, even if the maximum allowable currents are the same, a MOSFET may be destroyed earlier than an IGBT. Therefore, by employing a MOSFET as a protective semiconductor switching element, the time until the protective semiconductor switching element is destroyed can be shortened compared to the use of an IGBT.

In one variation, in the control circuit 35, the interruption of operation of the drive circuit 31 may include at least one of interrupting outputting the AC output power, interrupting outputting the DC output power, or interrupting inputting the input power. The limiting of the operation of the drive circuit 31 may include at least one of decreasing the setting value of the amplitude of the AC output power, or decreasing the setting value of the frequency of the AC output power.

In one variation, the control circuit 35 may perform the interrupting or decelerating the electric motor 42 stepwise. As one example, the control circuit 35 may reduce an effective value of the AC output power supplied to the electric motor 42 stepwise by decreasing at least one of the amplitude or the frequency of the AC output power stepwise.

In one variation, the operation of the control circuit 35 is not necessarily limited to the operation represented by the flowcharts shown in Fig. 4 to Fig. 9. The flowcharts shown in Fig. 4 to Fig. 9 are merely examples.

For instance, in the operation of the control circuit 35, the processes of steps S19 to S23, namely, the processes to interrupt outputting the AC output power and interrupt inputting the input power, are not essential. In the operation of the control circuit 35, the processes of steps S24 to S28, namely, the processes to interrupt outputting the AC output power and, after the lapse of the waiting period, operate by lowering the setting value of the amplitude of the AC output power, are not essential. Likewise, in the operation of the control circuit 35, the processes of steps S29 to S34, the processes of steps S35 to S41, or the processes of steps S42 to S51, are not essential.

The control circuit 35 need not necessarily interrupt or limit the operation of the drive circuit 31 in different ways depending on the time difference between the first time when the detected voltage first falls below the second voltage and the second time when the detected voltage falls below the second voltage again, or depending on the number of times the detected voltage falls below the second voltage.

In one variation, the first protective device 33 is not limited to a circuit configuration including the switches Su, Sv, and Sw, and may include a circuit configuration that adjusts the magnitude of the AC output power, such as the voltage, output from the drive circuit 31 to the electric motor 42. The first protective device 33 may be disposed within the drive circuit 31.

In one variation, the second protective device 34 is not limited to a circuit configuration including the switches S1 and S2, and may include a circuit configuration that adjusts the magnitude of the input power, such as the voltage, input from the power supply 10 to the drive circuit 31. The second protective device 34 may be disposed within the drive circuit 31.

In one variation, the third protective device 36 is not limited to a circuit configuration including the switches S3, S4, and S5, but may include a circuit configuration that adjusts the magnitude of the DC output power output from the converter circuit 311 to the inverter circuit 312, for example, the magnitude of the voltage.

In one variation, the control device 3 does not necessarily need to include both the first protective device 33 and the second protective device 34; it may include either the first protective device 33 or the second protective device 34. If the drive circuit 31 has a function to adjust the AC output power, the first protective device 33 and the second protective device 34 may be omitted. For example, the control circuit 35 may interrupt outputting the AC output power to the electric motor 42 by turning on the semiconductor switching elements V1 to V4 of the inverter circuit 312 and turning off the remaining semiconductor switching elements U1 to U4 and W1 to W4. In this case, the first protective device 33 may be omitted.

In one variation, the state detection circuit 32 is not limited to a configuration for detecting the voltage value of the DC output power of the converter circuit 311. The state detection circuit 32 may be configured to detect the state of at least one of the compressor 4 and the drive circuit 31.

For example, the state of the drive circuit 31 may be the current value of the current flowing through the drive circuit 31. As one example, the current value of the current flowing through the drive circuit 31 may include at least one of the current values of the output AC currents of the U-phase, V-phase, and W-phase legs of the drive circuit 31. In this case, an abnormality in the drive circuit 31 is a current abnormality. The control circuit 35 may detect a current abnormality in response to the current value of the current flowing through the drive circuit 31 detected by the state detection circuit 32 exceeding a predetermined current value. As another example, the current value of the current flowing through the drive circuit 31 may include the current value of the DC current flowing between the converter circuit 311 and the inverter circuit 312 of the drive circuit 31. In this case, if the current value of the DC current flowing between the converter circuit 311 and the inverter circuit 312 of the drive circuit 31 exceeds a predetermined current value, the control circuit 35 may determine that a current abnormality in the drive circuit 31 has occurred. When the control circuit 35 determines that a current abnormality in the drive circuit 31 has occurred (that is, detects a current abnormality in the drive circuit 31), it may interrupt or limit the operation of the drive circuit 31.

For example, the state of the compressor 4 may include at least one of the phase current of the compressor 4 and the rotational speed of the electric motor 42 of the compressor 4. The current value of the phase current of the compressor 4 may include the current values of the respective currents of the U-phase, V-phase, and W-phase. In this case, an abnormality in the compressor 4 may include an abnormality related to a layer short of the compressor 4. An abnormality related to a layer short of the compressor 4 may include the layer short itself of the compressor 4, an abnormality that may cause a layer short of the compressor 4, and an abnormality that may be caused by a layer short of the compressor 4. Specific examples of abnormalities related to a layer short of the compressor 4 include a layer short of the compressor 4, a ground fault of the compressor 4, and a phase loss operation of the compressor 4. When an imbalance of the phase currents of the compressor 4 occurs, there is a possibility that an abnormality related to a layer short of the compressor 4 has occurred. The control circuit 35 may determine whether an abnormality in the compressor 4 has occurred based on the state of the compressor 4 detected by the state detection circuit 32. For example, the control circuit 35 may determine that an abnormality related to a layer short of the compressor 4 has occurred if an imbalance of the phase currents of the compressor 4 occurs. Furthermore, when a deviation in the rotational speed of the electric motor 42 of the compressor 4 occurs, there is a possibility that an abnormality related to a layer short of the compressor 4 has occurred. When the control circuit 35 determines that an abnormality related to a layer short of the compressor 4 has occurred (that is, detects an abnormality related to a layer short of the compressor 4), it may interrupt or limit the operation of the drive circuit 31.

In one variation, the power supply 10 may be any of various AC power sources, particularly commercial power supplies. The voltage and frequency of commercial power supplies differ depending on the country or the like, but the drive circuit 31 may be configured to drive the electric motor 42 using any of various commercial power supplies.

In one variation, the drive circuit 31 may be configured to supply the AC output power corresponding to the type or the like of the electric motor 42. The AC output power may not only be three-phase AC power, but also single-phase AC power.

In one variation, the converter circuit 311 may have a plurality of third output points. The plurality of third output points may output mutually different voltages. The inverter circuit 312 may have a plurality of groups of semiconductor switching elements respectively connected between the plurality of third output points and the electric motor 42. If the total number of the first output point P1, the second output point P2, and the plurality of third output points P3 is n, the drive circuit 31 can provide (2 × n - 1) voltage levels. By increasing n, the voltage waveform applied to the electric motor 42 by the drive circuit 31 can be made closer to a sine wave.

In one variation, the circuit configuration of the inverter circuit 312 is not limited to the circuit configuration shown in Fig. 2. The circuit configuration of the inverter circuit 312 in Fig. 2 is a so-called NPC (Neutral-Point-Clamped) type, but it may also be an ANPC (Advanced-NPC) type. The inverter circuit 312 may include a plurality of groups of semiconductor switching elements respectively connected between the plurality of output points with different voltages and the electric motor. The plurality of semiconductor switching elements constituting the plurality of semiconductor switching element groups may include semiconductor switching elements commonly included in two or more semiconductor switching element groups.

In one variation, the refrigeration cycle device is not limited to an air conditioner in which one indoor unit is connected to one outdoor unit (so-called room air conditioner (RAC)). The refrigeration cycle device may be an air conditioner in which a plurality of indoor units are connected to one or more outdoor units (so-called package air conditioner (PAC), a variable refrigerant flow system (VRF)), or may be a refrigeration or refrigerating device such as a refrigerator or freezer, and is not limited to air conditioners.

In one variation, abnormality notifications such as first to third abnormality notifications may be issued directly or indirectly. Direct issuing means that the air conditioner outputs directly using the outdoor unit 1a, indoor unit 1b, or remote controller or the like. For example, abnormality notifications may be output using light from a light source device (LEDs, red lamps, warning display lamps, etc.) provided in the outdoor unit 1a, indoor unit 1b, or remote controller of the air conditioner; sound from a sound generation device (speakers, buzzers, alarms, sounders, alarm devices, etc.); or visual displays (message displays, backlight blinking, etc.) from a display device (displays, display panels, etc.). Indirect issuing means outputting and/or saving externally via a communications network such as the Internet or a server. Examples of indirect issuing include push notifications (notifications to mobile phones or smartphones), notifications to voice assistants (Alexa Echo, Google Home, etc.), automatic notifications to the manufacturer or maintenance company, message delivery to monitoring equipment of a management company, notifications to a service center, reports to fire trucks or security companies, and recording in an abnormality history of memory devices.

In one variation, when performing diagnosis of abnormalities of the refrigeration cycle circuit 2, the control device 3 may acquire various index values (state values). For example, the index values used in diagnosis of abnormalities of the refrigeration cycle circuit 2 may include suction pressure/evaporation saturation temperature, discharge pressure/condensation saturation temperature, suction gas refrigerant temperature, discharge gas refrigerant temperature, condenser outlet refrigerant temperature, evaporator inlet refrigerant temperature, evaporator outlet refrigerant temperature, load-side supply air temperature, receiver liquid level height, pre-discharge sign detection count, warning issue count, operation limitation count, and operation interruption count. The diagnosis results by the control device 3 are preferably stored for a predetermined period (for example, 1 to 3 years or longer) in an internal memory of the control device 3 or an external server or the like. Similarly, the history of abnormality notifications by the control device 3 is preferably stored for a predetermined period (for example, 1 to 3 years or longer) in an internal memory of the control device 3 or an external server or the like.

### [3. ASPECTS]

As apparent from the above embodiment and variations, the present disclosure includes the following aspects.

### [ASPECT 1]

An inverter circuit included in a drive circuit for driving a compressor of a refrigeration cycle circuit allowing circulation of a working medium,
the inverter circuit including a plurality of semiconductor switching elements and being configured to output AC output power to the compressor based on DC output power, and
the plurality of semiconductor switching elements including one or more protective semiconductor switching elements with a maximum allowable current smaller than 135 A.

### [ASPECT 2]

The inverter circuit of aspect 1, wherein:
a voltage of the DC output power is defined by first and second output points;
the plurality of semiconductor switching elements includes, for each phase of the AC output power, a first semiconductor switching element group connected between the first output point and the compressor, and a second semiconductor switching element group connected between the second output point and the compressor; and
the first semiconductor switching element group includes at least one of the one or more protective semiconductor switching elements and the second semiconductor switching element group includes at least one of remaining one or more protective semiconductor switching elements.

### [ASPECT 3]

The inverter circuit of aspect 2, wherein each of the first semiconductor switching element group and the second semiconductor switching element group constitutes a series circuit of semiconductor switching elements.

### [ASPECT 4]

The inverter circuit of aspect 2, wherein each of the first semiconductor switching element group and the second semiconductor switching element group constitutes a parallel circuit of semiconductor switching elements, the parallel circuit having a maximum allowable current smaller than 135 A.

### [ASPECT 5]

The inverter circuit of any one of aspects 1 to 4, wherein the one or more protective semiconductor switching elements include an IGBT.

### [ASPECT 6]

The inverter circuit of any one of aspects 1 to 4, wherein the one or more protective semiconductor switching elements include a MOSFET.

### [ASPECT 7]

The inverter circuit of any one of aspects 1 to 4, wherein the one or more protective semiconductor switching elements include a bipolar transistor.

### [ASPECT 8]

A drive circuit comprising:
the inverter circuit of any one of aspects 1 to 7; and
a converter circuit configured to output the DC output power to the inverter circuit based on input power from a power supply.

### [ASPECT 9]

A control device comprising:
the drive circuit of aspect 8; and
a control circuit configured to control the drive circuit,
the control circuit being configured to interrupt or limit an operation of the drive circuit in response to detection of an abnormality in at least one of the compressor or the drive circuit.

### [ASPECT 10]

The control device of aspect 9, further comprising a state detection circuit configured to detect a state of at least one of the compressor or the drive circuit,
the converter circuit being configured to output the DC output power so that a voltage of the DC output power becomes a first voltage,
the state detection circuit being configured to detect the DC output power to output a detection voltage indicating the voltage of the DC output power, and
the control circuit being configured to interrupt or limit the operation of the drive circuit when the detection voltage falls below a second voltage smaller than the first voltage.

### [ASPECT 11]

The control device of aspect 10, wherein the second voltage is between 0.3 times and 0.8 times the first voltage, inclusive.

### [ASPECT 12]

The control device of any one of aspects 9 to 11, wherein:
the compressor includes
   a tightly sealed vessel constituting a fluidic pathway for the working medium,
   a compression mechanism positioned inside the tightly sealed vessel to compress the working medium, and
   an electric motor positioned inside the tightly sealed vessel to operate the compression mechanism; and
the inverter circuit is configured to outputs the AC output power to the electric motor.

### [ASPECT 13]

A refrigeration cycle device comprising:
the control device of any one of aspects 9 to 12; and
the refrigeration cycle circuit.

### [ASPECT 14]

The refrigeration cycle device of aspect 13, wherein the working medium contains ethylene-based fluoroolefin.

### [ASPECT 15]

The refrigeration cycle device of aspect 14, wherein the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene.

### [ASPECT 16]

The refrigeration cycle device of aspect 13, wherein the working medium further contains difluoromethane.

### [ASPECT 17]

The refrigeration cycle device of aspect 13, wherein the working medium further contains a saturated hydrocarbon.

### [ASPECT 18]

The refrigeration cycle device of aspect 14, wherein the working medium contains a haloalkane with 1 or 2 carbon atoms as a disproportionation inhibitor for suppressing a disproportionation reaction of the ethylene-based fluoroolefin.

### [ASPECT 19]

The refrigeration cycle device of aspect 17, wherein the saturated hydrocarbon contains n-propane.

### [ASPECT 20]

A control method performed by a control device for controlling a compressor of a refrigeration cycle circuit allowing circulation of a working medium,
the control device including a drive circuit,
the drive circuit including
   a converter circuit configured to output DC output power based on input power from a power supply, and
   an inverter circuit including a plurality of semiconductor switching elements and being configured to output AC output power to the compressor based on the DC output power,
the plurality of semiconductor switching elements including one or more protective semiconductor switching elements with a maximum allowable current smaller than 135 A, and
the control method comprising interrupting or limiting an operation of the drive circuit in response to detection of an abnormality in at least one of the compressor or the drive circuit.

### [ASPECT 21]

A program executed by a computer system included in a control device for controlling a compressor of a refrigeration cycle circuit allowing circulation of a working medium,
the control device including a drive circuit,
the drive circuit including
   a converter circuit configured to output DC output power based on input power from a power supply, and
   an inverter circuit including a plurality of semiconductor switching elements and being configured to output AC output power to the compressor based on the DC output power,
the plurality of semiconductor switching elements including one or more protective semiconductor switching elements with a maximum allowable current smaller than 135 A, and
the program enabling the computer system to interrupt or limit an operation of the drive circuit in response to detection of an abnormality in at least one of the compressor or the drive circuit.

Aspects 2 to 7, aspects 10 to 12, and aspects 14 to 19 are optional and not essential. Aspects 2 to 7, aspects 10 to 12, and aspects 14 to 19 can be combined with aspect 20 or 21 appropriately.

### INDUSTRIAL APPLICABILITY

The present disclosure can be applied to inverter circuits, drive circuits, control devices, refrigeration cycle devices, control methods, and programs. In particular, the present disclosure is applicable to an inverter circuit for a refrigeration cycle circuit containing ethylene-based fluoroolefin as a refrigerant component, a drive circuit including the inverter circuit, .a control device including the drive circuit, a refrigeration cycle device including the refrigeration cycle circuit and the control device, a control method performed by the control device, and a program (computer program) used in the control device.

### REFERENCE SIGNS LIST

- 1: Refrigeration Cycle Device
- 2: Refrigeration Cycle Circuit
- 3, 3A, 3B, 3C: Control Device
- 4: Compressor
- 10: Power Supply
- 20: Working Medium
- 31, 31A, 31B: Drive Circuit
- 32: State Detection Circuit
- 35: Control Circuit
- 40: Sealed Container
- 41: Compression Mechanism
- 42: Electric Motor
- 311, 311A: Converter Circuit
- P1: First Output Point
- P2: Second Output Point
- 312, 312A, 312B: Inverter Circuit

U1, U4 Semiconductor Switching Element (Protective Semiconductor Switching Element)
U2, U3 Semiconductor Switching Element
V1, V4 Semiconductor Switching Element (Protective Semiconductor Switching Element)
V2, V3 Semiconductor Switching Element
W1, W4 Semiconductor Switching Element (Protective Semiconductor Switching Element)
W2, W3 Semiconductor Switching Element
U5, U6 Semiconductor Switching Element (Protective Semiconductor Switching Element)
V5, V6 Semiconductor Switching Element (Protective Semiconductor Switching Element)
W5, W6 Semiconductor Switching Element (Protective Semiconductor Switching Element)
U7 to U10 Semiconductor Switching Element (Protective Semiconductor Switching Element)
V7 to V10 Semiconductor Switching Element (Protective Semiconductor Switching Element)
W7 to W10 Semiconductor Switching Element (Protective Semiconductor Switching Element)

## Claims

1. An inverter circuit included in a drive circuit for driving a compressor of a refrigeration cycle circuit allowing circulation of a working medium,
the inverter circuit including a plurality of semiconductor switching elements and being configured to output AC output power to the compressor based on DC output power, and
the plurality of semiconductor switching elements including one or more protective semiconductor switching elements with a maximum allowable current smaller than 135 A.

2. The inverter circuit of claim 1, wherein:
a voltage of the DC output power is defined by first and second output points;
the plurality of semiconductor switching elements include, for each phase of the AC output power, a first semiconductor switching element group connected between the first output point and the compressor, and a second semiconductor switching element group connected between the second output point and the compressor; and
the first semiconductor switching element group includes at least one of the one or more protective semiconductor switching elements and the second semiconductor switching element group includes at least one of remaining one or more protective semiconductor switching elements.

3. The inverter circuit of claim 2, wherein each of the first semiconductor switching element group and the second semiconductor switching element group constitutes a series circuit of semiconductor switching elements.

4. The inverter circuit of claim 2, wherein each of the first semiconductor switching element group and the second semiconductor switching element group constitutes a parallel circuit of semiconductor switching elements, the parallel circuit having a maximum allowable current smaller than 135 A.

5. The inverter circuit of claim 1, wherein the one or more protective semiconductor switching elements include an IGBT.

6. The inverter circuit of claim 1, wherein the one or more protective semiconductor switching elements include a MOSFET.

7. The inverter circuit of claim 1, wherein the one or more protective semiconductor switching elements include a bipolar transistor.

8. A drive circuit comprising:
the inverter circuit of any one of claims 1 to 7; and
a converter circuit configured to output the DC output power to the inverter circuit based on input power from a power supply.

9. A control device comprising:
the drive circuit of claim 8; and
a control circuit configured to control the drive circuit,
the control circuit being configured to interrupt or limit an operation of the drive circuit in response to detection of an abnormality in at least one of the compressor or the drive circuit.

10. The control device of claim 9, further comprising a state detection circuit configured to detect a state of at least one of the compressor or the drive circuit,
the converter circuit being configured to output the DC output power so that a voltage of the DC output power becomes a first voltage,
the state detection circuit being configured to detect the DC output power to output a detection voltage indicating the voltage of the DC output power, and
the control circuit being configured to interrupt or limit the operation of the drive circuit when the detection voltage falls below a second voltage smaller than the first voltage.

11. The control device of claim 10, wherein the second voltage is between 0.3 times and 0.8 times the first voltage, inclusive.

12. A refrigeration cycle device comprising:
the control device of claim 9; and
the refrigeration cycle circuit.

13. The refrigeration cycle device of claim 12, wherein the working medium contains ethylene-based fluoroolefin.

14. The refrigeration cycle device of claim 13, wherein the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene.

15. The refrigeration cycle device of claim 12, wherein the working medium further contains difluoromethane.

16. The refrigeration cycle device of claim 12, wherein the working medium further contains a saturated hydrocarbon.

17. The refrigeration cycle device of claim 13, wherein the working medium contains a haloalkane with 1 or 2 carbon atoms as a disproportionation inhibitor for suppressing a disproportionation reaction of the ethylene-based fluoroolefin.

18. The refrigeration cycle device of claim 16, wherein the saturated hydrocarbon contains n-propane.

19. A control method performed by a control device for controlling a compressor of a refrigeration cycle circuit allowing circulation of a working medium,
the control device including a drive circuit,
the drive circuit including
a converter circuit configured to output DC output power based on input power from a power supply, and
an inverter circuit including a plurality of semiconductor switching elements and configured to output AC output power to the compressor based on the DC output power,
the plurality of semiconductor switching elements including one or more protective semiconductor switching elements with a maximum allowable current smaller than 135 A, and
the control method comprising interrupting or limiting an operation of the drive circuit in response to detection of an abnormality in at least one of the compressor or the drive circuit.

20. A program executed by a computer system included in a control device for controlling a compressor of a refrigeration cycle circuit allowing circulation of a working medium,
the control device including a drive circuit,
the drive circuit including
a converter circuit configured to output DC output power based on input power from a power supply, and
an inverter circuit including a plurality of semiconductor switching elements and configured to output AC output power to the compressor based on the DC output power,
the plurality of semiconductor switching elements including one or more protective semiconductor switching elements with a maximum allowable current smaller than 135 A, and
the program enabling the computer system to interrupt or limit an operation of the drive circuit in response to detection of an abnormality in at least one of the compressor or the drive circuit.
